# EUROPEAN PATENT SPECIFICATION

(11) **EP 0 804 276 B1**
(45) Date of publication and mention of the grant of the patent: **14.05.2003**
(21) Application number: 96905174.7
(22) Date of filing: 19.01.1996
(51) Int. Cl.: B01D 53/88, B01D 53/74, B01D 53/04, B60H 3/00, B60H 3/06, B60H 1/00, B60H 1/32, B01D 53/86

(54) **METHOD AND APPARATUS FOR CLEANING AMBIENT AIR BY CONTACT WITH A STATIONARY SUBSTRATE**
VERFAHREN UND VORRICHTUNG ZUR UMGEBUNGSLUFTREINIGUNG DURCH KONTAKT MIT EINEM STATIONÄREN SUBSTRAT
PROCEDE ET APPAREIL PERMETTANT DE NETTOYER L'AIR AMBIANT PAR CONTACT AVEC UN SUBSTRAT FIXE

(30) Priority: 20.01.1995 US 376332; 24.03.1995 US 410445; 29.03.1995 US 412525; 29.09.1995 US 537206; 29.09.1995 US 537208; 27.10.1995 US 549996
(43) Date of publication of application: 05.11.1997
(73) Proprietor: ENGELHARD CORPORATION, Iselin, New Jersey 08830-0770 (US)
(72) Inventor: HOKE, Jeffrey, B., North Brunswick, NJ 08902 (US); NOVAK, John, R., Lawrenceville, NJ 08648 (US); STEGER, John, J., Pittstown, NJ 08867 (US); POLES, Terence, C., Ringoes, NJ 08551 (US); QUICK, L., Michael, Bridgewater, NJ 08807 (US); HECK, Ronald, M., Frenchtown, NJ 08825 (US); HU, Zhicheng, Edison, NJ 08820 (US); DURILLA, Michael, Howell, NJ 07731 (US)
(74) Representative: Fisher, Adrian John
(86) International application number: US9600781
(87) International publication number: WO96022149

(56) References cited:
- WO-A-90/11433
- WO-A-93/05821
- DE-A- 4 007 964
- DE-C- 4 318 738
- DE-U- 9 415 457
- US-A- 3 738 088
- US-A- 5 145 822
- DATABASE WPI Section Ch, Week 8039 Derwent Publications Ltd., London, GB; Class J01, AN 80-68830C XP002004499 & JP,A,55 106 813 (MATSUSHITA ELEC IND KK) , 17 August 1980

## Description

### BACKGROUND OF THE INVENTION

### Field of the Invention

The present invention relates to a method and apparatus for cleaning the atmosphere; and more particularly to a stationary substrate comprising at least one atmosphere contacting surface having a pollutant treating material thereon.

### Discussion of the Related Art

A review of literature relating to pollution control reveals many references discussing the general approach of cleaning waste gas streams entering the environment. If too much of one pollutant or another is detected as being discharged, steps are taken to reduce the level of that pollutant, either by treating the gas stream or by modifying the process that produces the pollutant. However, there has been little effort to treat pollutants which are already in the environment; the environment has been left to its own self cleansing systems.

U.S. Patent No. 3,738,088 discloses an air filtering assembly for cleaning pollution from the ambient air by utilizing a vehicle as a mobile cleaning device. A variety of elements are used in combination with a vehicle to clean the ambient air as the vehicle is driven through the environment. In particular, modified vehicles include ducting to control air stream velocity and direct the air to a variety of filters, electronic precipitators and catalyzed postfilters.

German Patent DE 43 18 738 C1 also discloses a process for the physical and chemical cleaning of outside air. Motor vehicles are used as carriers of conventional filters and/or catalysts, which do not constitute operational components of the vehicle but are used to directly clean atmospheric air.

Another approach is discussed in U.S. Pat. No. 5,147,429, which is directed to a mobile airborne air cleaning station. In particular, this patent features a dirigible for collecting air with a plurality of different types of air cleaning devices contained therein. The air cleaning devices disclosed include wet scrubbers, filtration machines, and cyclonic spray scrubbers.

The difficulty with devices previously disclosed for cleaning ambient air in the atmosphere is that they require new and additional equipment, and may be required to be operated separately just to accomplish such cleaning. For example, the modified vehicle disclosed in U.S. Pat. No. 3,738,088 requires separate ducting and filters, and the equipment laden dirigible of U.S. Pat. No. 5,147,429 is operated solely for such cleaning purposes.

German patent DE 40 07 965 C2 to Klaus Hager discloses a catalyst comprising copper oxides for converting ozone and a mixture of copper oxides and manganese oxides for converting carbon monoxide. The catalyst can be applied as a coating to a self heating radiator, oil coolers or charged-air coolers. The catalyst coating comprises heat resistant binders which are also gas permeable. It is indicated that the copper oxides and manganese oxides are widely used in gas mask filters and have the disadvantage of being poisoned by water vapor. However, the heating of the surfaces of the automobile during operation evaporates the water. In this way, continuous use of the catalyst is possible since no drying agent is necessary.

Manganese oxides are known to catalyze the oxidation of ozone to form oxygen. Many commercially available types of manganese compound and compositions, including alpha manganese oxide are disclosed to catalyze the reaction of ozone to form oxygen. In particular, it is known to use the cryptomelane form of alpha manganese oxide to catalyze the reaction of ozone to form oxygen.

Alpha manganese oxides are disclosed in references such as O'Young, Hydrothermal Synthesis of Manganese Oxides with Tunnel Structures, Modern Analytical Techniques for Analysis of Petroleum, presented at the Symposium on Advances in Zeolites and Pillared Clay Structures before the Division of Petroleum Chemistry, Inc. American Chemical Society New York City Meeting, August 25-30, 1991 beginning at page 348. Such materials are also disclosed in U.S. Patent No. 5,340,562 to O'Young, et al. Additionally, forms of α-MnO₂ are disclosed in McKenzie, the Synthesis of Birnessite, Cryptomelane, and Some Other Oxides and Hydroxides of Manganese, Mineralogical Magazine, December 1971, Vol. 38, pp. 493-502. For the purposes of the present invention, α-MnO₂ is defined to include hollandite (BaMn₈O₁₆.xH₂O), cryptomelane (KMn₈O₁₆.xH₂O), manjiroite (NaMn₈O₁₆.xH₂O) and coronadite (PbMn₈O₁₆.xH₂O). O'Young discloses these materials to have a three dimensional framework tunnel structure (U.S. Patent No. 5,340,562 and O'Young Hydrothermal Synthesis of Manganese Oxides with Tunnel Structures). For the purposes of the present invention, α-MnO₂ is considered to have a 2 x 2 tunnel structure and to include hollandite, cryptomelane, manjiroite and coronadite.

Commonly assigned U.S. Pat. No. 5,422,331 discloses methods and catalyst compositions for abating noxious substances, particularly ozone, contained in air. The treatment of carbon monoxide, hydrogen sulfide and hydrocarbons is also discussed. A primary focus of this patent is methods of treating air taken into and/or circulated in aircraft cabins, with the cabins of trains, buses and other vehicles being mentioned as well. The patent also indicates that the disclosed catalysts can be used to abate ozone in equipment, such as xerographic copy machines, which generate ozone. Further, the patent indicates that the catalysts can be applied to surfaces in air handling systems for residences, office and factory buildings, public buildings, hospitals and the like. For this method, the catalyst can be applied to existing substrates of the air handling system, such as fan blades in air handling fans or compressors, grills, louvers or any other surface exposed to the air stream.

Responsive to the difficulties associated with devices for proactively treating the atmosphere, the Assignee herein in U.S. Appl. No. 08/410,445, filed March 24, 1995, disclosed apparatus and related methods for treating the atmosphere by employing a moving vehicle. U.S. Pat. No. 6,200,542 claims priority from U.S. 08/410,445. In preferred embodiments a portion of the cooling system (e.g. the radiator) is coated with a catalytic or adsorption composition. Additionally, a fan associated with the cooling system can operate to draw or force air into operative contact with the radiator. Pollutants contained within the air such as ozone and/or carbon monoxide are then converted to non-polluting compounds (e.g. oxygen gas and carbon dioxide).

U.S. Appl. No. 08/412,525 ('525) discloses methods and apparatus for treating pollutants present in the atmosphere, by the use of a stationary substrate coated with pollutant treating composition. U.S. Pat. No. 6,200,542 claims priority from U.S. 08/412,525. The present application is directed to particular embodiments of the invention set forth in the U.S. 08/412, 525 application, directed at coating various surfaces which contact the atmosphere with pollution treating compositions.

### SUMMARY OF THE INVENTION

The present invention relates to apparatus, a method and a device to treat the atmosphere to remove pollutants therefrom. The term "atmosphere" is defined herein as the mass of air surrounding the earth. The term "ambient air" shall mean the atmosphere which is naturally or purposefully drawn or forced towards a pollutant treating substrate. It is also intended to include air which has been heated either incidentally or by a heating means.

The present invention is generally directed to a method for treating the atmosphere comprising passing ambient air over a stationary substrate having at least one air contacting surface having a pollutant treating material thereon. The stationary substrate is any substrate that can be modified, for example by coating, to contain the pollutant treating material. For purposes of this application, a substrate is considered stationary when it is operatively attached to a non-moving structure. For example, the fan or adjustable louvers of an air handling system for a building are considered stationary, even though the fan revolves and the louvers can be moved.

According to a first aspect of the present invention there is provided a method for treating the atmosphere to reduce the level of ozone contained therein, the method comprising passing ambient air into operative contact with a pollutant treating surface having a pollutant treating material thereon, wherein the pollutant treating surface is disposed on a stationary substrate, the pollutant treating material comprising a catalytic composition consisting of manganese oxide substantially free of anions.

According to a second aspect of the present invention there is provided apparatus for treating the atmosphere to reduce the level of at least one gaseous pollutant contained therein, the apparatus comprising:
(a) a stationary substrate having at least one air contacting surface;
(b) a pollutant treating material disposed on said air contacting surface, the pollutant treating material comprising a catalytic composition consisting of manganese oxide substantially free of anions; and
(c) air passing means for passing ambient air into operative contact with the pollutant treating material.

According to a third aspect of the present invention there is provided a device for treating the atmosphere to reduce the level of at least one gaseous pollutant contained therein, wherein said device is capable of being operatively mounted onto a stationary air handling system which draws or forces a stream of ambient air therethrough, the device comprising:
(a) support means comprising at least one air contacting surface;
(b) a pollutant treating material disposed on said air contacting surface, the pollutant treating material comprising a catalytic composition consisting of manganese oxide substantially free anions; and
(c) mounting means for mounting said device onto said air handling system such that the pollutant treating material is in operative contact with the stream of ambient air.

Preferred and optional features of the invention are set out in dependent claims 2 to 22, 24 to 40 and 42 to 43.

In one embodiment of the present invention, the pollutant treating substrate is a surface which already exists on a stationary object. This includes surfaces, as discussed above and further below, such as heat exchange surfaces, fan blades, building exteriors, duct surfaces, and so forth.

Preferably the surface is one which permits periodic rejuvenating of the pollutant treating material. Such rejuvenating may include cleaning, reactivating and/or replacing the pollutant treating material on the substrate, or any other process which restores the active properties of the material. Suitable cleaning processes include water washing, steam washing or air lancing. Such cleaning processes can be used to remove contaminants from the pollutant treating material, or to remove some or all of the material prior to applying fresh material to the substrate. Reactivating steps include, but are not limited to, thermal processes to remove volatile pollutants or other contaminants which can be volatilized by thermal treatment, and chemical processes to restore the pollutant treating properties of the material.

In another embodiment of the present invention, the pollutant treating substrate can be a surface of an additional component which can be added to a stationary object. For example, a pollutant treating substrate can be included in a device which is permanently or removably mounted on an existing air-handling system so as to provide a pollutant treating substrate in the path of the air flow without substantial alteration to the existing equipment. The added substrate is preferably in the form of a replaceable device, to facilitate replacement or rejuvenation of the pollutant treating material. Alternatively, the substrate may be permanently mounted in a manner which permits rejuvenating of the pollutant treating material in place.

A key aspect of the present invention is that it is directed to reducing levels of pollutants in the atmosphere in general, rather than to treating an airstream being drawn or forced into or out of a confined space, such as a building. The ambient air may be drawn over the substrate by natural wind currents or by the use of an air drawing means such as a fan or the like to draw or force ambient air into operative contact with the substrate having the pollutant treating composition thereon.

In one embodiment of the present invention, the pollutant treating process is carried out at or below ordinary room temperature, which is defined for purposes of this application as about 25°C. As discussed below, most adsorbents and many catalysts can be used at such temperatures. Methods and apparatus which can operate at below ordinary ambient temperatures are desirable because they do not require additional heating.

In another embodiment, the pollutant treating process is carried out at temperatures above the 25°C ordinary room temperature. Such elevated temperatures may be necessary to activate the pollutant treating material, particularly certain catalysts, or may simply improve the efficiency of the treatment process. The elevated temperatures may be provided by either heating the air prior to its contact with the treatment surface, by heating the treatment surface, or by heating both. Such heating may be the result of purposefully heating the air or the surface, or by the use of a system in which the air or the surface is normally at a temperature above 25°C. Furthermore, it is not necessary that the heating be continuous, but only that the temperature at the air contacting surface be above the desired temperature for at least a measurable period of time, to allow the treatment to proceed for that period of time. For example, an exterior surface which is heated during the daylight by the sun, could be catalytically active just during the day, and this may be satisfactory for treating a pollutant which is at particularly high levels during the day. The present invention is also applicable to processes where the ambient air or treatment surface is heated by contact with a object which is normally heated for other purposes, either continuously or intermittently, such as the coils of an air conditioning condenser.

The present invention is generally directed to methods and articles to treat pollutants in air. Such pollutants may typically comprise from 0 to 400 parts, more typically 1 to 300, and yet more typically 1 to 200, parts per billion (ppb) ozone; 0 to 30 parts, and more typically 1 to 20, parts per million (ppm) carbon monoxide; and 2 to 3000 ppb unsaturated hydrocarbon compounds such as C₂ to about C₂₀ olefins and partially oxygenated hydrocarbons such as alcohols, aldehydes, esters, ethers, ketones and the like. Other pollutants present may include nitrogen oxides and sulfur oxides. The National Ambient Air Quality Standard for ozone is 120 ppb, and for carbon monoxide is 9 ppm.

Pollutant treating compositions include catalyst compositions useful for catalyzing the conversion of pollutants present in the atmosphere to non-objectionable materials.

Catalyst compositions are needed which can assist in the conversion of the pollutants to harmless compounds or to less harmful compounds. Useful and preferred catalyst compositions include compositions which catalyze the reaction of ozone to form oxygen, catalyze the reaction of carbon monoxide to form carbon dioxide, and/or catalyze the reaction of hydrocarbons to form water and carbon dioxide. Specific and preferred catalysts to catalyze the reaction of hydrocarbons are useful for catalyzing the reaction of low molecular weight unsaturated hydrocarbons having from two to twenty carbons and at least one double bond, such as C₂ to about C₈ mono-olefins. Such low molecular weight hydrocarbons have been identified as being sufficiently reactive to cause smog. Particular olefins which can be reacted include propylene and butylene. A useful and preferred catalyst can catalyze the reactions of both ozone and carbon monoxide; and preferably ozone, carbon monoxide and hydrocarbons.

Ozone - Useful and preferred catalyst compositions according to the invention to treat ozone include a composition consisting of manganese oxides such as Mn₂O₃ and MnO₂ with a preferred composition comprising α-MnO₂, and cryptomelane being most preferred, said oxides being substantially free of anorganic anions.

The above compositions can be applied by coating to at least one atmosphere contacting surface. Ambient conditions are the conditions of the atmosphere. By ambient operating conditions it is meant the conditions, such as temperature, of the atmosphere contacting surface during normal operation without the use of additional energy directed to heating the pollutant treating composition. Certain atmosphere contacting surfaces can be at the same or similar temperature as the atmosphere. It has been found that preferred catalysts which catalyze the reaction of ozone can catalyze the reaction of ozone at ambient conditions in ranges as low as 5°C to 30°C.

Atmosphere contacting surfaces may have higher temperatures than the ambient atmospheric temperatures due to the nature of the operation of the component underlying the surface. For example, among the preferred atmosphere contacting surfaces are the heat transfer surfaces of air conditioning or steam condensers due to their high surface area and elevated temperatures during normal operation, due to the nature of their operation. The actual surface temperature will vary widely depending on the type of equipment in use. Typical home air conditioning condensers may operate at surface temperatures which range up to about 60°C and typically are from about 40°C to 50°C. Steam condensers may operate over a wide range of surface temperatures, depending on the temperature and pressure of the steam. The temperature range of these atmosphere contacting surfaces helps to enhance the conversion rates of the ozone, carbon monoxide and hydrocarbon catalysts supported on such surfaces. The catalysts useful in the present invention are particularly effective at the higher temperatures present on the surfaces of such equipment.

Various of the catalyst compositions can be combined, and a combined coating applied to the atmosphere contacting surface. Alternatively, different surfaces or different parts of the same surface can be coated with different catalyst compositions.

The method and apparatus of the present invention are preferably designed so that the pollutants can be treated at ambient conditions or at the ambient operating conditions of the atmosphere contacting surface. The present invention is particularly useful for treating ozone by coating atmosphere contacting surfaces with suitable catalysts useful to destroy such pollutants even at ambient conditions, and at surface temperatures typically from at least 0°C, preferably from 10°C to 105°C, and more preferably from 40°C to 100°C. Carbon monoxide is preferably treated at atmosphere contacting surface temperatures from 20°C to 105°C. Low molecular weight hydrocarbons, typically unsaturated hydrocarbons having at least one unsaturated bond, such as C₂ to about C₂₀ olefins and typically C₂ to C₈ mono-olefins, are preferably treated at atmosphere contacting surface temperatures of from 40°C to 105°C. The percent conversion of ozone, carbon monoxide and/or hydrocarbons depends on the temperature and space velocity of the atmospheric air relative to the atmosphere contacting surface, and the temperature of the atmosphere contacting surface.

Thus, in a preferred embodiment of the present invention, ambient levels of ozone, carbon monoxide and/or hydrocarbon are reduced without the addition of any mechanical features or energy source to existing stationary substrates. The pollutant treating surface may be one which is already present on the stationary substrate, or one which is added as a removable or permanently mounted unit. Preferably, the catalytic reaction takes place at the normal ambient operating conditions experienced by the surfaces of stationary substrate so that no changes in the construction or method of operation are required.

While the preferred embodiments of the present invention are directed to the destruction of pollutants at the ambient operating temperatures of the atmosphere contacting surface, it is also desirable to treat pollutants which have a catalyzed reaction temperature higher than the ambient temperature or ambient operating temperature of the available atmosphere contacting surface. Such pollutants include hydrocarbons and nitrogen oxides and any carbon monoxide which bypasses or is not treated at the atmosphere contacting surface. These pollutants can be treated at higher temperatures typically in the range of at least 100 to 450°C. This can be accomplished, for example, by the use of an auxiliary heated catalyzed surface. By an auxiliary heated surface, it is meant that there are supplemental means to heat the surface. A preferred auxiliary heated surface is the surface of an electrically heated catalyzed monolith such as an electrically heated catalyzed metal honeycomb of the type known to those skilled in the art. Another preferred auxiliary heated surface is one heated by a process stream, such as steam or hot water, which may be readily available in industrial plants or commercial facilities. Furthermore, when the air is being forced through a heat exchanger, then a heated fluid passing in or out of the heat exchanger, or a side stream thereof, can be used as the source of heat for the auxiliary surface.

Adsorption compositions can also be used to adsorb pollutants such as hydrocarbons and/or particulate matter for later oxidation or subsequent removal. Useful and preferred adsorption compositions include zeolites, other molecular sieves, carbon, and Group IIA alkaline earth metal oxides such as calcium oxide. Hydrocarbons and particulate matter can be adsorbed from 0°C to 110°C and subsequently treated by desorption followed by catalytic reaction or incineration.

It is preferred to coat areas of the stationary substrate that have a relatively high surface area exposed to a large flow rate of atmospheric air. For this reason, the surfaces of air-cooled heat exchangers are particularly desirable, because they are designed for high surface area and high exposure to air flow. When a separate pollutant treating device is added onto existing equipment, then such a device can desirably be modeled as a heat exchanger, to provide maximum air contact area. Furthermore, if a heat exchanger is used as an add-on device, then a heating fluid can be channeled through the heat exchanger to elevate the temperature of the pollutant treating substrate. This may be particularly desirable when catalysts which require elevated temperatures are used.

### BRIEF DESCRIPTION OF THE DRAWINGS

The following drawings in which like reference characters indicate like parts are illustrative of embodiments of the invention and are not intended to limit the invention as encompassed by the claims forming part of the application.

Figure 1 is a schematic representation of one embodiment of an atmospheric pollutant treating device embodying the present invention, wherein the device is an air conditioning condenser.

Figure 2 is a schematic representation of another embodiment of the present invention, in which a pollutant treating substrate is added to a commercial or industrial air cooled heat exchanger.

Figure 3 is a schematic representation of a particular type of air cooled heat exchanger.

Figure 4 is an IR spectrum for cryptomelane.

Figure 5 is an XRD pattern for cryptomelane shown as counts using a square root scale versus the Bragg angle, 2θ.

### DETAILED DESCRIPTION OF THE INVENTION

The present invention is directed to apparatus and a method for treating the atmosphere in which a stationary substrate has a pollutant treating composition thereon. When air is drawn or forced into contact with the substrate the pollutants are caused to change into non-polluting compounds. The atmosphere contacting surface of the substrate which has the pollutant treating composition thereon is one which is in direct contact with the ambient air.

There are many atmosphere contacting surfaces which can be used as the pollutant treating substrates in accordance with the present invention. The substrate may be part of an existing air handling systems, such as those used in residential, commercial and industrial buildings, as well as power plants, oil refineries, chemical plants and any other facility in which air is drawn or forced over coatable surfaces. Such air handling systems include the outdoor components of heating, ventilation and air conditioning systems (referred to collectively as HVAC systems), industrial cooling systems, or any other system in which ambient air is naturally or purposefully forced into contact with a suitable substrate.

The outdoor components of HVAC systems, particularly condensers, include fans for blowing or forcing ambient air over external heat transfer surfaces, such as cooling coils or fins. In such systems, the ambient air passes over the heat transfer surface and returns to the atmosphere. Suitable substrates for applying pollutant treating materials include any exposed surfaces, such as fan blades, duct and plenum surfaces, louvers, grills, motor housings, filtration media, screens, and heat transfer surfaces.

As discussed above, heat transfer surfaces in HVAC, as well as other air handling systems, include various coils, fins, plates or other surfaces which are designed to transfer heat to or from ambient air. Of particular use as substrates for catalytic pollutant treating materials are those surfaces which are at elevated temperatures above standard ambient temperature of about 25°C. Desirably, the substrates are of even higher temperatures, because many catalysts are more effective at higher temperatures. In air conditioning systems, the coils or fins used to dissipate accumulated heat to the atmosphere are usually at temperatures above 25°C, and often much higher, depending on the coolant and operating parameters. Such heat dissipation apparatus can be as small as the external coils of a window air conditioner, or as large as the cooling towers used for commercial buildings. In addition, surfaces downstream from the heat transfer equipment, such as plenum or duct walls, fan blades or grills, may also be at elevated temperatures for improved catalytic activity.

Air handling systems are also used for many operations other than HVAC. Cooling towers are used to dissipate excess heat from various industrial sources. In power plants, cooling towers dissipate heat from relatively low temperature (but above 25°C) water or steam from which no further useful power can be extracted. In such systems, huge amounts of air are blown over heat transfer surfaces, or directly over or through the water being cooled. Suitable substrates for coating in accordance with the present invention include fan blades, walls of cooling towers, heat transfer surfaces and any other surfaces exposed to the flow of air.

In chemical plants, oil refineries and the like, there are many surfaces suitable for use as pollutant treating substrates. Such plants include large air handling systems and cooling towers, as generally discussed above. For example, low temperature process steam is cooled to condense it to water prior to returning it to the boiler. Various operating units may include air cooling systems, such as external fins, to dissipate excess heat.

As discussed above, many air handling systems provide a means, such as a fan, to circulate air ambient air over a heated surface for the purpose of cooling that surface. Generally the fan only circulates air over the surface when the equipment is operating. In accordance with a preferred embodiment of the present invention, the fan in such an intermittently operated system can be set to operate continuously to allow the pollutant treating process to continue even when the equipment is not otherwise operating. In a variation on this process, a temperature sensor can be provided in the air handling system, which can switch the circulating fan on or off in response to the temperature at one or more points in the system. Thus, even when a condenser or heat exchanger is not operating, the latent heat can still be used to catalyze pollutants. The operation of such a system would depend on the desired temperature needed to treat a particular pollutant. Alternatively, the fan can be set to operate in response to some other external variable, such as the level of a particular pollutant, or at particular time intervals. In another alternative, a manual or remote control switch could be provided to actuate the fan of one or multiple air handling systems. For example, all of the air circulating fans in an area could be actuated simultaneously from a central controller in response to detection of a high level of a pollutant, or at particular times of the day.

In addition to the substrates which can be coated in active air handling systems, there are many surfaces which are naturally or passively exposed to a flow of ambient air. Some of these surfaces are particularly suitable for coating with pollutant treating compositions in accordance with the present invention. In this regard, surfaces which are also at elevated temperatures, either by contact with a source of heat or by exposure to the sun, are especially suitable. For example, the exterior surfaces of buildings or industrial equipment may be suitable substrates. As air blows over these surfaces, pollutant treating compositions can reduce the levels of pollutants in the air. Exposed surfaces of buildings may be at elevated temperature due to solar heating or heat loss from the building. Process equipment in refineries and chemical plants is often at elevated temperatures, making them particularly suitable for catalytic substrates.

When such passive treatment systems are used with a pollutant treatment material which is more effective at an elevated temperature, it is not necessary for the surface or air to be at such elevated temperature continuously. It is enough for the contacting surface to attain the desired temperature for any measurable period of time. Then, at least during that period of time, the pollutant treating process can operate at such desired temperature.

Roofs of buildings are of particular interest as pollutant treating substrates, because they are especially heated by the sun and internal heat from the building, and are naturally exposed to ambient air flow. Pollutant treating compositions can be incorporated into various roofing materials, such as shingles, tar or tar paper, or may be sprayed or painted onto existing surfaces. In like manner, road surfaces are also an excellent substrate to support pollutant treating compositions. As with roofs, road surfaces are heated by the sun and exposed to large flows of ambient air. In addition, exhaust from the vehicles on the roads results in localized concentrations of pollutants, rendering treated road surfaces particularly useful and efficient for reducing atmospheric pollution. The pollutant treating compositions can be incorporated into the paving materials, or applied as a topcoat to existing roadways.

Another reason why chemical plants, oil refineries and power plants are specifically identified for treatment by the methods of the present invention is that these facilities are already subject to stringent air pollution requirements, and reductions in ambient pollution levels can translate into increased profit. Furthermore, equipment and processes in such plants may produce various localized areas of high pollutant concentration, where the treatment compositions can be most effective. For example, industrial plants include many electric motors, some particularly large, which may produce relatively high localized ozone levels due to electric arcing. Ozone treating materials can be applied to the motor casings, or to other surfaces in the vicinity of the motors. Further, ventilation systems exhausting air from buildings or enclosures containing electrical equipment which produces ozone, such as motors or transformers, can be coated to reduce ozone levels. Furthermore, transformers may also emit other pollutants, such as hydrocarbons, which may also be treated.

Another possible source of ozone in industrial plants are electrostatic precipitators. These are commonly found in dust handling equipment, such as bag houses, in which electric fields are used to remove dust from an air stream. In generating the electric fields, arcing may occur, which can result in the formation of large amounts of ozone. Treatment surfaces can be in the path of the air flow, as discussed above for air-handling systems, or can be on the exterior of the equipment or the enclosures housing the equipment where there may be high localized ozone concentrations.

U.S. Pat. Appl. No. 08/412,525 also discusses applying pollutant treating compositions to free standing objects such as billboards or signs. U.S. Pat. No. 6,200,542 claims priority from U.S. 08/412,525. More generally, any free standing object with exposed surfaces could be used as a substrate in accordance with the present invention. In addition to billboards and signs, such objects may include flagpoles, utility poles, including wires and equipment carried thereon, transmission antennae (which may also have localized high levels of ozone), storage tanks, bridges or the like. The key point is that the object include a surface which is exposed to ambient air and can act as a substrate for carrying a pollutant treating composition. Preferably, the surface is also heated, either naturally or by some source of applied heat.

Another variation on coating free standing objects is to erect structures specifically designed for treating air. This can included adding baffles, wings or other structures to buildings at the locations of exceptional wind flow. For example, wings could extend from the corners of buildings, taking advantage of the geometry of the building and the prevailing ambient wind currents. Such baffles or wings can either be solid or porous, with porous structures offering the ability to increase active surface area.

An advantage of the present invention is that the atmosphere contacting surface useful to support a pollution treating composition can be any existing surface which lies in the path of a flow of ambient air. Accordingly, the apparatus and method of the present invention can be located on new components or retrofitted onto old ones.

Pollutant treating compositions include catalyst compositions useful for catalyzing the conversion of pollutants present in the atmosphere to non-objectionable materials. Alternatively, adsorption compositions can be used as the pollutant treating composition to adsorb pollutants which can be destroyed upon adsorption, or stored for further treatment at a later time.

Catalyst compositions can be used which can convert the pollutants to harmless compounds or to less harmful compounds. Useful and preferred catalyst compositions include compositions which catalyze the reaction of ozone to form oxygen. The compositions can be applied by coating at least one atmosphere contacting surface. Particularly preferred compositions catalyze the destruction of ozone at ambient conditions.

Various catalyst compositions can be combined, and a combined coating applied to the atmosphere contacting surface. Alternatively, different surfaces or different parts of the same surface can be coated with different catalyst compositions.

The method and apparatus of the present invention are preferably designed so that the pollutants can be treated at ambient conditions, requiring no heating means or incidental heat. The present invention is particularly useful for treating ozone by coating a surface with suitable catalysts useful to destroy such pollutants at ambient conditions. The percent conversion of ozone depends on the temperature and space velocity of the atmospheric air relative to the catalyst surface, and the temperature of the atmosphere contacting surface.

Accordingly, the present invention, in one embodiment results in at least reducing the ozone levels present in the atmosphere without the addition of any mechanical features or energy source to existing substrates. Additionally, the catalytic reaction of ozone to oxygen takes place at the normal ambient conditions experienced by the surfaces of these substrates so that minimal changes in the construction or method of operation are required.

While some embodiments of the present invention are directed to the destruction of ozone at ambient operating temperatures, it will be noted that the ambient air may be heated by a heating means such as a heater or by incidental contact with a heated component of the stationary substrate. This may allow other pollutants to be catalyzed which require a higher reaction temperature than the ambient temperature or ambient operating temperature of the atmosphere contacting surface. Such pollutants include carbon monoxide, hydrocarbons and nitrogen oxides. These pollutants can be treated at higher temperatures typically in the range of about 40°C to 450°C.

It is preferred to coat areas of the substrate that have a relatively high surface area exposed to a large flow rate of atmospheric air. Air is drawn or forced over the catalytic surface. Pollutant treating compositions can be coated onto ambient air contacting surfaces as described herein. In particular, catalyst compositions can be coated onto various metallic surfaces.

The present invention can be applied to any stationary substrate with at least one atmosphere contacting surface comprising a pollutant treating composition located thereon. As the atmospheric air encounters the pollutant treating composition, various pollutants including particulate matter and/or gaseous pollutants carried in the air can be catalytically reacted or adsorbed as the case may be by the pollutant treating composition located on the atmosphere contacting surface.

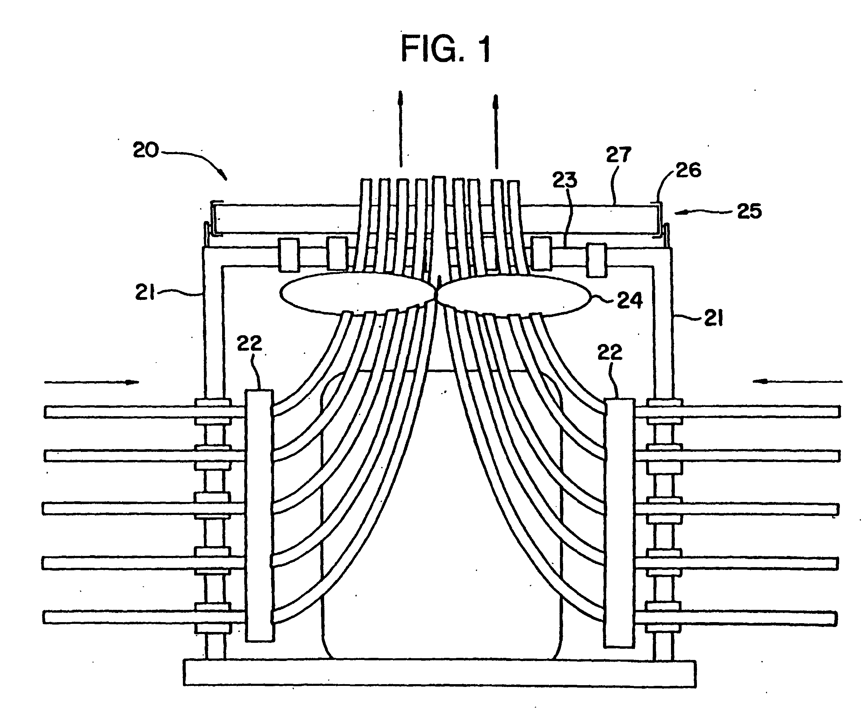

Figure 1 is a schematic representation of one embodiment of an atmospheric pollutant treating device in accordance with the present invention, wherein the device is an air conditioning condenser. Such condensers are generally located outdoors, and are used to air cool an air conditioning fluid which is transported through coils in the unit. In Figure 1, ambient air which may contain ozone enters condenser 20 through one or more inlet grills 21, passes through one or more heat exchangers 22, and exits the condenser through one or more outlet grills 23. The air is forced through the condenser by fan 24, which is shown in this embodiment mounted to the top of the condenser housing. It will be readily recognized by one skilled in the art that the components of such a condenser can be arranged in any suitable operating configuration, provided that the ambient air passes in operative contact with a heat exchanger and returns to the atmosphere. Thus, the inlet can be on the sides, as shown, or on the bottom or top of the unit, and the outlet can be at the top as shown, or on the sides or bottom of the unit. The heat exchangers can be next to the inlets, as shown or next to the outlet. The fan can be between the heat exchangers and the outlet, as shown, or at any other location in the air stream. The condenser unit can be of any suitable shape, such as cubic, rectangular or cylindrical.

In accordance with one embodiment of the invention, a pollutant treating material is applied to a surface in the flow path of the air passing through the condenser. Suitable surfaces for this material are inlet grill 21, heat exchanger 22, outlet grill 23 or the blades of fan 24. When the pollutant treating material includes an ozone catalyst, as discussed elsewhere in the present specification, it is generally more effective to operate at the highest available temperature. Because heat exchanger 22 is at an elevated temperature during normal operation of the condenser, the pollutant treating surface is therefore preferably located on the heat exchanger or down stream of the heat exchanger. In the embodiment shown in Figure 1, fan 24 and outlet grill 23 are both downstream from heat exchanger 22, and therefore would be preferred sites for the pollutant treating surface.

In another embodiment of this invention, a separate treatment device 25 is provided, which contains the pollutant treating surface. Device 25 may be at any suitable location in the airstream passing through the condenser. In the embodiment as shown, device 25 is mounted on the exterior of condenser 20, to receive the air flowing out of outlet grill 23. It will be readily seen that device 25 could be located anywhere in the airstream passing through the condenser, such as at the inlet, after the heat exchanger, or next to the fan. As discussed above, when a heat sensitive catalyst is being used, then device 25 is preferably located downstream of heat exchanger 22 to take advantage of the elevated temperature of the air passing therethrough.

Treatment device 25 may be permanently or removably mounted to condenser 20. Preferably, device 25 is removably mounted to permit replacement or rejuvenation of the pollutant treating material. In a preferred embodiment, treatment device 25 includes a housing 26 which is attached to condenser 20 for receiving and holding a removable treatment cartridge 27. Treatment cartridge 27 may be of any suitable configuration, such as a honeycomb, filter pad, frame or screen coated with the catalyst or adsorbent material. The cartridge can be designed to be discarded after a single use, or to be cleaned or otherwise rejuvenated and reused.

A dust filter (not shown) may be provided to protect the active pollutant treating surface of treatment cartridge 27. Such a dust filter can be located anywhere in unit 20 or device 25 upstream of cartridge 27, or can even be integral with cartridge 27, upstream of the active surface.

In a test of a condenser such as that depicted in Figure 1, an automobile radiator which had been coated with ozone treating catalyst was used as treatment device 25. Such automobile radiators are described in Example 1 *et seq*. below, and are conveniently used as test devices on the stationary apparatus of the present invention.

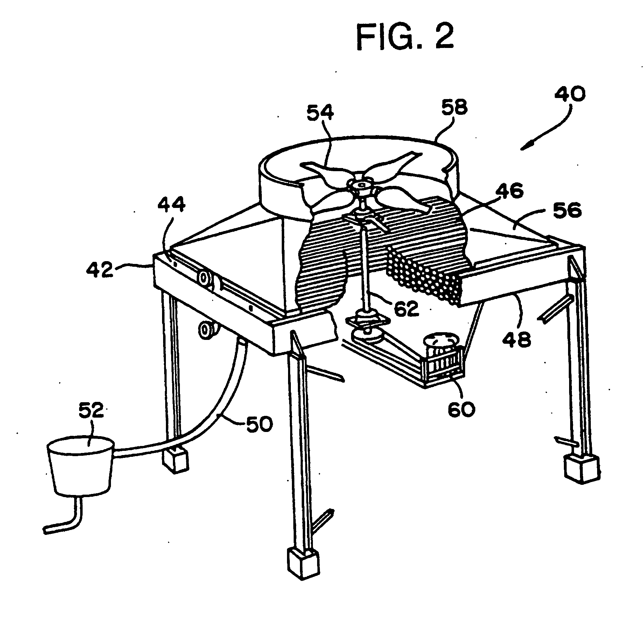

Figure 2 is a schematic representation of another embodiment of the present invention, in which a pollutant treating substrate is added to a commercial or industrial air cooled heat exchanger 40. Such heat exchangers are commonly used to condense low pressure steam into water, and may be found in industrial plants, power plants, commercial heating systems, and other steam handling facilities. As depicted in Figure 2, steam is fed to header portion 42 (shown cut-away) of air-cooled heat exchanger 40, which is provided with top vents 44 for removing non-condensibles. The steam circulates back and forth through finned tube bundle 46 mounted in channel frame 48 where it is cooled and condensed by the air flow. The condensate is removed by bottom drains (not shown) and carried by drain line 50 to condensate tank 52. Air flow is provided by axial flow fan 54 which is shown mounted above the tube bundle 46, in a plenum 56 which channels the air flow to fan ring 58. Fan 54 is driven by electric motor 60, shown mounted below tube bundle 46, which is connected directly or indirectly to drive shaft 62. In operation, air is drawn by fan 54 through tube bundle 46 and out through fan ring 58.

It will be readily recognized by one skilled in the art that the components of such a heat exchanger can be arranged in any suitable operating configuration, provided that the ambient air passes in operative contact with the tube bundle and returns to the atmosphere. Thus, tube bundle 46 may be mounted horizontally (as shown), vertically or diagonally. Further, the tube bundle can be of any suitable design which allows condensing of steam passing therethrough. Fan 54 may be located on the output side of tube bundle 46 (as shown), at the inlet or even between separate heat exchange elements. Ducting to direct the air flow, may be included on the inlet and/or outlet sides of the heat exchanger, as well as protective screens or grills.

In accordance with one embodiment of the invention, the pollutant treating material may be applied to an existing surface in the flow path of the air passing through the heat exchanger. Suitable surfaces for this material include tube bundle 46, the blades of fan 54, and the inner surfaces of plenum 56 and fan ring 58. Alternatively, the material could be applied to any other ducting, screens or grills which are in the air flow path. As discussed elsewhere in the present specification, when the pollutant treating material includes an ozone catalyst or any other catalyst which is more effective at an elevated temperature, it is preferred to apply the material to a surface with the highest available temperature. Because tube bundle 46 is at an elevated temperature during normal operation of the condenser, the pollutant treating surface is preferably located on the tube bundle or downstream thereof. In the embodiment shown in Figure 2, fan 54, plenum 56 and fan ring 58 are all downstream of tube bundle 46, and would therefore be preferred sites for the pollutant treating surface.

In another embodiment of this invention, a separate treatment device (not shown) may be provided, which contains the pollutant treating surface. Such a device may be at any suitable location in the airstream passing through the heat exchanger. In the embodiment as shown, the treatment device could desirably be mounted at the outlet of fan ring 58, or within plenum 56 between tube bundle 46 and fan 54. The treatment device could also be located on the inlet side of tube bundle 46. However, as discussed above, when a heat sensitive catalyst is being used, then the treatment device is preferably located downstream of tube bundle 46 to take advantage of the elevated temperature of the air passing therethrough.

As with the embodiment depicted in Figure 1, the treatment device for the present air-cooled heat exchanger 40 may be permanently or removably mounted to the unit. Preferably, the device is removably mounted to permit replacement or rejuvenation of the pollutant treating material. In a preferred embodiment, the treatment device includes a housing which is attached to heat exchanger 40 for receiving and holding a removable treatment substrate. The treatment substrate may be of any suitable configuration, and can be designed to be discarded after a single use, or to be cleaned or otherwise rejuvenated and reused.

For industrial applications, a high surface area structure, such as a ceramic or metal honeycomb, can provide an excellent substrate to support the pollutant treating material. The high surface area structure can also be any type of filter, screen or grill capable of supporting the treatment material.

Alternatively, the substrate can be a separate heat exchanger, in which a separate source of heat may be provided to increase the working temperature of the pollutant treating material. The separate source of heat can be a side stream of the steam which is entering or the condensate which is exiting the principal heat exchanger 40, or an independent heated stream. Alternatively, electric or combustion heating could be used.

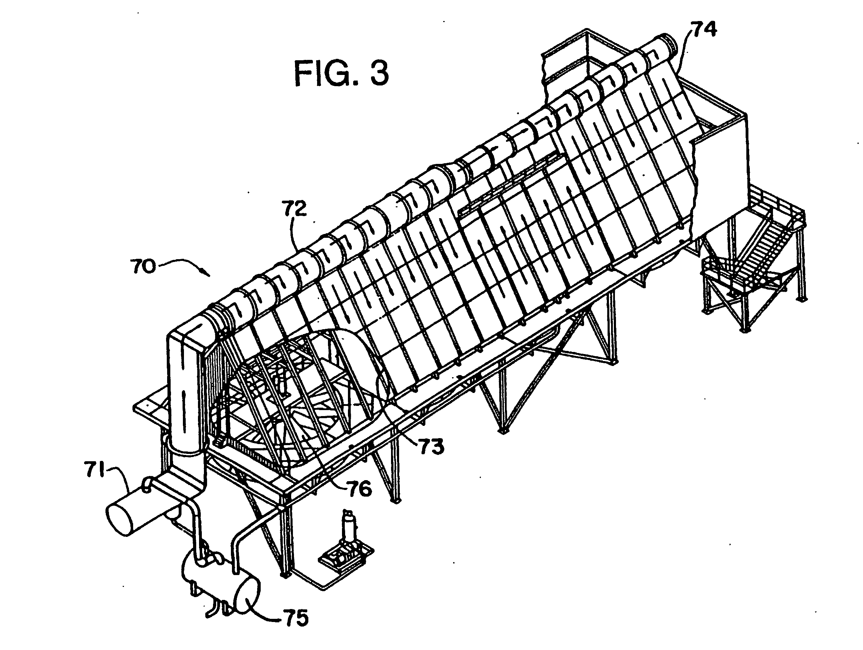

Figure 3 is a schematic representation of a particular type of air cooled heat exchanger 70, which is in use in some power plants to condense large volumes of low pressure steam. Steam enters the unit at inlet 71, and is distributed through a top-mounted plenum 72. The steam passes through diagonally disposed heat exchange tubes 73 mounted in housing 74, and the condensate is collected in condensate tank 75. Air flow is provided by bottom mounted forced draft fans 76, which direct the air upwardly through the tube bundles and then to the atmosphere.

In this embodiment, the diagonally disposed heat exchange tubes may be directly coated with the pollutant treating material. Alternatively, separate pollutant treating devices may be permanently or removably affixed to the inside or outside of the diagonal surface of housing 74. In a preferred embodiment, the treating devices are pivotably mounted to the housing so that they can be swung out of the way to permit cleaning and servicing of the underlying tubes 73.

As discussed above, test units of catalyzed automobile radiators can be attached to, or simply laid on, the exterior of such a heat exchanger to test the catalysts of the present invention.

The **pollutant treating composition** is a catalytic composition. Useful and preferred catalyst compositions are compositions which can catalytically cause the reaction of targeted pollutants at the space velocity of the air as it contacts the surface, and at the temperature of the surface at the point of contact. Typically, these catalyzed reactions will be in the temperature range at the atmosphere contacting surface of from 0°C to 130°C, more typically 20°C to 105°C and yet more typically from about 40°C to 100°C. There is no limit on the efficiency of the reaction as long as some reaction takes place. Preferably, there is at least a 1% conversion efficiency with as high a conversion efficiency as possible. Useful conversion efficiencies are preferably at least about 5% and more preferably at least about 10%. Preferred conversions depend on the particular pollutant and pollutant treating composition. Where ozone is treated with a catalytic composition on an atmosphere contacting surface it is preferred that the conversion efficiency be greater than about from 30% to 40%, preferably greater than 50%, and more preferably greater than 70%. Preferred conversion for carbon monoxide is greater than 30% and preferably greater than 50%. Preferred conversion efficiency for hydrocarbons and partially oxygenated hydrocarbons is at least 10%, preferably at least 15%, and most preferably at least 25%. These conversion rates are particularly preferred where the atmosphere contacting surface is at ambient operating conditions of up to about 110°C. These temperatures are the surface temperatures typically experienced during normal operation of atmosphere contacting surfaces of the vehicle including the surfaces of the radiator and air conditioning condenser. Where there is supplemental heating of the atmosphere contacting surface such as by having an electrically heated catalytic monolith, grid, screen, gauze or the like, it is preferred that the conversion efficiency be greater than 90% and more preferably greater than 95%. The conversion efficiency is based on the mole percent of the particular pollutants in'the air which react in the presence of the catalyst composition.

**Ozone treating catalyst** compositions consist of manganese oxides, such as for example manganese dioxide, including non stoichiometric manganese dioxide (e.g., MnO_{(1.5-2.0)}), and/or Mn₂O₃ which are substantially free of anions. Preferred manganese dioxides, which are nominally referred to as MnO₂ have a chemical formula wherein the molar ratio of manganese to oxide is about from 1.5 to 2.0, such as Mn₈O₁₆. Up to 100 percent by weight of manganese dioxide MnO₂ can be used in catalyst compositions to treat ozone.

Useful and preferred manganese dioxides are alpha manganese dioxides nominally having a molar ratio of manganese to oxygen of from 1 to 2. Useful alpha manganese dioxides are disclosed in U.S. Patent No. 5,340,562 to O'Young, et al.; also in O'Young, Hydrothermal Synthesis of Manganese Oxides with Tunnel Structures presented at the Symposium on Advances in Zeolites and Pillared Clay Structures presented before the Division of Petroleum Chemistry, Inc. American Chemical Society New York City Meeting, August 25-30, 1991 beginning at page 342, and in McKenzie, the Synthesis of Birnessite, Cryptomelane, and Some Other Oxides and Hydroxides of Manganese, Mineralogical Magazine, December 1971, Vol. 38, pp. 493-502. For the purposes of the present invention, the preferred alpha manganese dioxide is a 2 x 2 tunnel structure which can be hollandite (BaMn₈O₁₆.xH₂O), cryptomelane (KMn₈O₁₆.xH₂O), manjiroite (NaMn₈O₁₆.xH₂O) and coronadite (PbMn₈O₁₆.xH₂O).

The manganese dioxides useful in the present. invention preferably have a surface area of greater than 150 m²/g, more preferably greater than 200 m²/g, yet more preferably greater than 250 m²/g and most preferably greater than 275 m²/g. The upper range of such materials can be as high as 300 m²/g, 325 m²/g or even 350 m²/g. Preferred materials are in the range of 200-350 m²/g, preferably 250-325 m²/g and most preferably 275-300 m²/g. The composition preferably comprises a binder as of the type described below with preferred binders being polymeric binders.

It has been found that the use of compositions comprising the cryptomelane form of alpha manganese oxide, which also contain a polymeric binder can result in greater than 50%, preferably greater than 60% and most preferably from 75-85% conversion of ozone in a concentration range of from 0 to 400 parts per billion (ppb) and an air stream moving across a radiator at space velocity of from 300,000 to 650,000 reciprocal hours.

The preferred cryptomelane manganese dioxide has a crystallite size ranging from 2 to 10 and preferably from less than 5 nm. It can be calcined at a temperature range of from 250°C to 550°C and preferably below 500°C and greater than 300°C for at least 1.5 hours and preferably at least 2 hours up to about 6 hours.

The preferred cryptomelane can be made in accordance described in the above referenced articles and patents to O'Young and McKenzie. The cryptomelane can be made by reacting a manganese salt including salts selected from the group consisting MnCl₂, Mn(NO₃)₂, MnSO₄ and Mn(CH₃COO)₂ with a permanganate compound. Cryptomelane is made using potassium permanganate; hollandite is made using barium permanganate; coronadite is made using lead permanganate; and manjiroite is made using sodium permanganate. It is recognized that the alpha manganese useful in the present invention can contain one or more of hollandite, cryptomelane, manjiroite or coronadite compounds. Even when making cryptomelane minor amounts of other metal ions such as sodium may be present. Useful methods to form the alpha manganese dioxide are described in the above references.

The preferred alpha manganese for use in accordance with the present invention is cryptomelane. The cryptomelane is "clean" or substantially free of inorganic anions, particularly on the surface. Such anions could include chlorides, sulfates and nitrates which are introduced during the method to form cryptomelane. An alternate method to make the clean cryptomelane is to react a manganese carboxylate, preferably manganese acetate, with potassium permanganate. It has been found that the use of such a material which has been calcined is "clean". The use of material containing inorganic anions can result in conversion of ozone to oxygen of up to about 60%. The use of cryptomelane with a "clean" surface results in conversions of up about 80%.

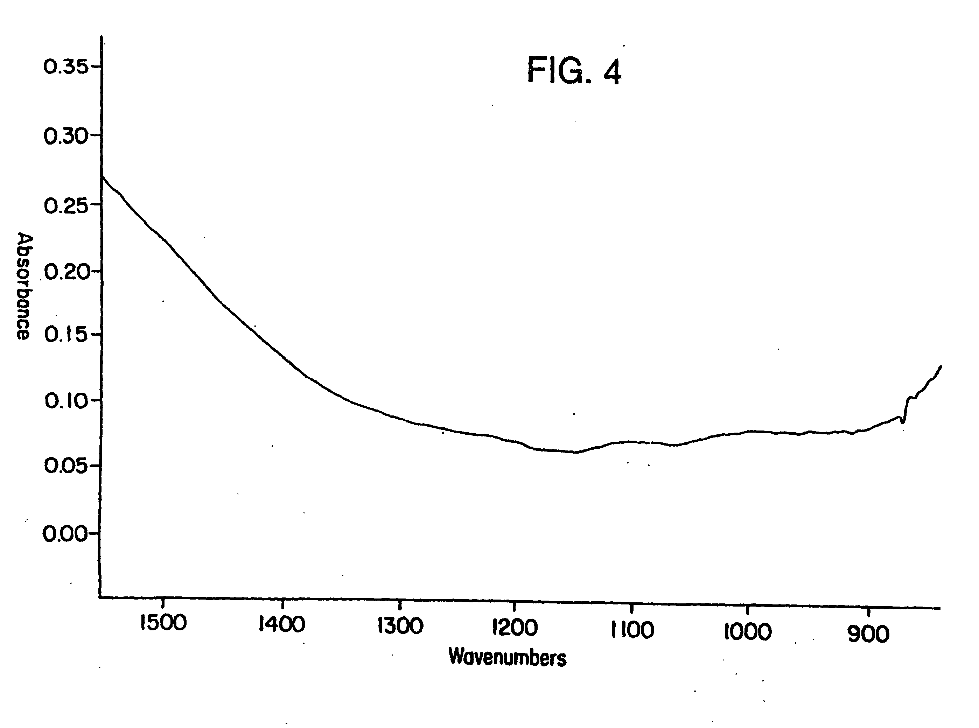

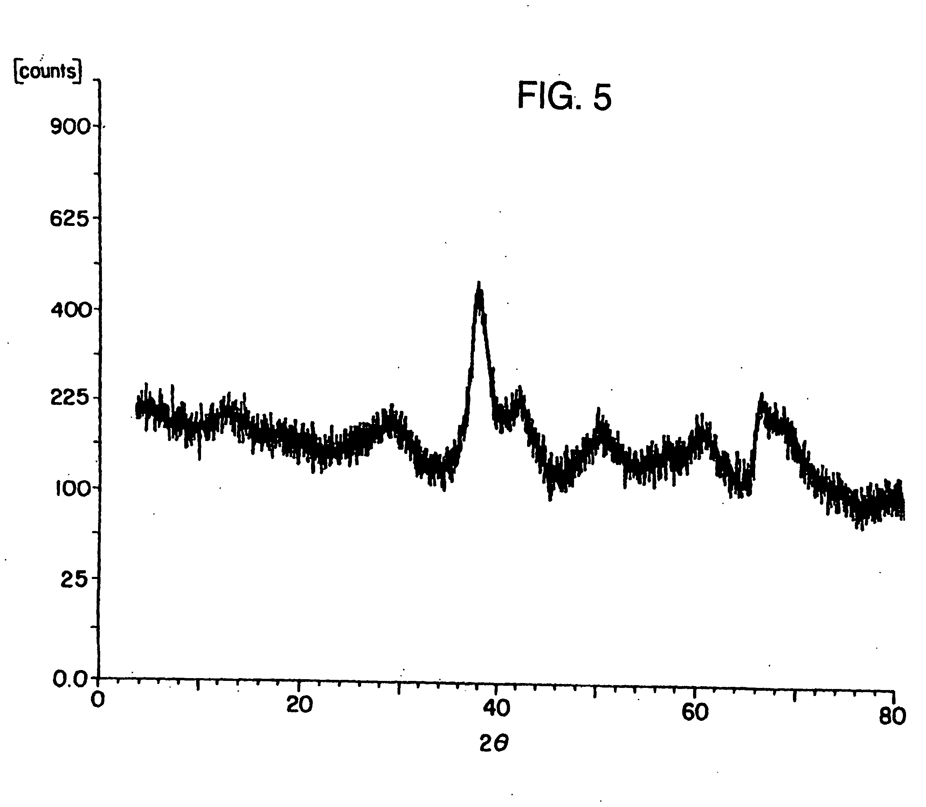

It is believed that the carboxylates are burned off during the calcination process. However, inorganic anions remain on the surface even during calcination. The inorganic anions such as sulfates can be washed away with an aqueous solution or a slightly acidic aqueous solution. the alpha manganese dioxide is a "clean" alpha manganese dioxide.. The cryptomelane can be washed at from about 60°C to 100°C for about one-half hour to remove a significant amount of sulfate anions. The nitrate anions may be removed in a similar manner. The "clean" alpha manganese dioxide is characterized as having an IR spectra as illustrated in Figure 4 and in X-ray diffraction (XRD) pattern as illustrated in Figure 5. Such a cryptomelane preferably has a surface area greater than 200 m²/g and more preferably greater than 250 m²/g.

A preferred method of making cryptomelane useful in the present invention comprises mixing an aqueous acidic manganese salt solution with a potassium permanganate solution. The acidic manganese salt solution has a pH of from 0.5 to 3 and can be made acidic using any common acid, preferably acetic acid at a concentration of from 0.5 to 5.0 normal and more preferably from 1.0 to 2.0 normal. The mixture forms a slurry which is stirred at a temperature range of from 50°C to 110°C. The slurry is filtered and the filtrate is dried at a temperature range of from 75°C to 200°C. The resulting cryptomelane crystals have a surface area of typically in the range of from 200 m²/g to 350 m²/g.

A review of the IR spectrum for the most preferred cryptomelane, shown in Figure 4 is characterized by the absence of peaks assignable to carbonate, sulfate and nitrate groups. Expected peaks for carbonate groups appear in the range of from 1320 to 1520 wavenumbers; and for sulfate groups appear in the range of from 950 to 1250 wavenumbers. Figure 5 is a powder X-ray diffraction pattern for high surface area cryptomelane prepared in Example 2. The X-ray pattern for cryptomelane useful in the present invention is characterized by broad peaks resulting from small crystallite size (∼5-10nm). Approximate peak positions (±0.15°2θ) and approximate relative intensities (±5) for cryptomelane using CuK_{α} radiation as shown in Figure 5 are: 2θ/Relative Intensities - 12.1/9; 18/9; 28.3/10; 37.5/100; 41.8/32; 49.7/16; 53.8/5; 60.1/13; 55.7/38; and 68.0/23.

A preferred method of making cryptomelane useful in the present invention comprises mixing an aqueous acidic manganese salt solution with a potassium permanganate solution. The acidic manganese salt solution preferably has a pH of from 0.5 to 3.0 and can be made acidic using any common acid, preferably acetic acid at a concentration of from 0.5 to 5.0 normal and more preferably from 1.0 to 2.0 normal. The mixture forms a slurry which is stirred at a temperature range of from 50°C to 110°C. The slurry is filtered and the filtrate is dried at a temperature range of from 75°C to 200°C. The resulting cryptomelane crystals have a surface area of typically in the range of from 200 m²/g to 350 m²/g.

Various useful and preferred pollutant treating catalyst compositions can comprise a suitable **support material** such as a refractory oxide support. The preferred refractory oxide can be selected from the group consisting of silica, alumina, titania, ceria, zirconia and chromia, and mixtures thereof. More preferably, the support is at least one activated, high surface area compound selected from the group consisting of alumina, silica, titania, silica-alumina, silica-zirconia, alumina silicates, alumina zirconia, alumina-chromia and alumina-ceria. The refractory oxide can be in suitable form including bulk particulate form typically having particle sizes ranging from about 0.1 to about 100 and preferably 1 to 10 µm or in sol form also having a particle size ranging from about 1 to about 50 and preferably about 1 to about 10 nm. A preferred titania sol support comprises titania having a particle size ranging from about 1 to about 10, and typically from about 2 to 5 nm.

Also useful as a preferred support is a coprecipitate of a manganese oxide and zirconia. This composition can be made as recited in U.S. Patent No. 5,283,041 incorporated herein by reference. Briefly, this coprecipitated support material preferably comprises in a ratio based on the weight of manganese and zirconium metals from 5:95 to 95:5; preferably 10:90 to 75:25; more preferably 10:90 to 50:50; and most preferably from 15:85 to 50:50. A useful and preferred embodiment comprises a Mn:Zr weight ratio of 20:80. U.S. Patent No. 5,283,041 describes a preferred method to make a coprecipitate of a manganese oxide component and a zirconia component. As recited in U.S. Patent No. 5,283,041 a zirconia oxide and manganese oxide material may be prepared by mixing aqueous solutions of suitable zirconium oxide precursors such as zirconium oxynitrate, zirconium acetate, zirconium oxychioride, or zirconium oxysulfate and a suitable manganese oxide precursor such as manganese nitrate, manganese acetate, manganese dichloride or manganese dibromide, adding a sufficient amount of a base such as ammonium hydroxide to obtain a pH of 8-9, filtering the resulting precipitate, washing with water, and drying at 450°-500°C.

A useful support for a catalyst to treat ozone is selected from a refractory oxide support, preferably alumina and silica-alumina with a more preferred support being a silica-alumina support comprising from about 1% to 10% by weight of silica and from 90% to 99% by weight of alumina.

Particularly preferred is a titania support which has been found useful since it results in a catalyst composition having enhanced ozone conversion as well as significant conversion of carbon monoxide and low molecular weight olefins. Also useful are high surface area, macroporous refractory oxides, preferably alumina and titania having a surface area of greater than 150 m²/g and preferably ranging from about 150 to 350, preferably from 200 to 300, and more preferably from 225 to 275 m²/g; a porosity of greater than 0.5 cc/g, typically ranging from 0.5 to 4.0 and preferably about from 1 to 2 cc/g measured based on mercury porosometry; and particle sizes range from 0.1 to 10 µm. A useful material is Versal GL alumina having a surface area of about 260 m²/g, a porosity of 1.4 to 1.5 cc/g and supplied by LaRoche Industries.

A preferred titania sol support comprises titania having a particle size ranging from about 1 to about 10, and typically from about 2 to 5 nm.

A preferred bulk titania has a surface area of about from 25 to 120 m²/g, and preferably from 50 to 100 m²/g; and a particle size of about from 0.1 to 10 µm. A specific and preferred bulk titania support has a surface area of 45-50 m²/g, a particle size of about 1 µm, and is sold by DeGussa as P-25.

A preferred silica-zirconia support comprises from 1 to 10 percent silica and 90 to 99 percent zirconia. Preferred support particles have high surface area, e.g. from 100 to 500 square meters per gram (m²/g) surface area, preferably from 150 to 450 m²/g, more preferably from 200 to 400 m²/g, to enhance dispersion of the catalytic metal component or components thereon. The preferred refractory metal oxide support also has a high porosity with pores of up to about 145 nm radius, e.g., from about 0.75 to 1.5 cubic centimeters per gram (cm³/g), preferably from about 0.9 to 1.2 cm³/g, and a pore size range of at least about 50% of the porosity being provided by pores of 5 to 100 nm in radius.

The catalytic compositions employed in the present invention preferably comprise **a binder** which acts to adhere the composition and to provide adhesion to the atmosphere contacting surface. It has been found that a preferred binder is a polymeric binder used in amounts of from 0.5 to 20, more preferably 2 to 10, and most preferably to 2 to 5 percent by weight of binder based on the weight of the composition. Preferably, the binder is a polymeric binder which can be a thermosetting or thermoplastic polymeric binder. The polymeric binder can have suitable stabilizers and age resistors known in the polymeric art. The polymer can be a plastic or elastomeric polymer. Most preferred are thermosetting, elastomeric polymers introduced as a latex into the catalyst into a slurry of the catalyst composition, preferably an aqueous slurry. Upon application of the composition and heating the binder material can crosslink .providing a suitable support which enhances the integrity of the coating, its adhesion to the atmosphere contacting surface and provides structural stability under vibrations encountered in motor vehicles. The use of preferred polymeric binder enables the pollutant treating composition to adhere to the atmosphere contacting surface without the necessity of an undercoat layer. The binder can comprise water resistant additives to improve water resistance and improve adhesion. Such additives can include fluorocarbon emulsions and petroleum wax emulsions.

Useful polymeric compositions include polyethylene, polypropylene, polyolefin copolymers, polyisoprene, polybutadiene, polybutadiene copolymers, chlorinated rubber, nitrile rubber, polychloroprene, ethylene-propylene-diene elastomers, polystyrene, polyacrylate, polymethacrylate, polyacrylonitrile, poly(vinyl esters), poly(vinyl halides), polyamides, cellulosic polymers, polyimides, acrylics, vinyl acrylics and styrene acrylics, poly vinyl alcohol, thermoplastic polyesters, thermosetting polyesters, poly(phenylene oxide), poly(phenylene sulfide), fluorinated polymers such as poly(tetrafluoroethylene) polyvinylidene fluoride, poly(vinylfluoride) and chloro/fluoro copolymers such as ethylene chlorotrifluoroethylene copolymer, polyamide, phenolic resins and epoxy resins, polyurethane, and silicone polymers. A most preferred polymeric material is an acrylic polymeric latex as described in the accompanying examples.

Particularly preferred polymers and copolymers are vinyl acrylic polymers and ethylene vinyl acrylic copolymers. A preferred vinyl acetate polymer is across linking polymer sold by National Starch and Chemical Company as Xlink 2833. It is described as a vinyl acrylic polymer having a Tg of -15°C, 45% solids, a pH of 4.5 and a viscosity of 300 cps. In particular, it is indicated to have vinyl acetate CAS No. 108-05-4 in a concentration range of less than 0.5 percent. It is indicated to be a vinyl acetate copolymer. Other preferred vinyl acetate copolymers which are sold by the National Starch and Chemical Company include Dur-O-Set E-623 and Dur-O-Set E-646. Dur-O-Set E-623 is indicated to be ethylene vinyl acetate copolymers having a Tg of 0°C, 52% solids, a pH of 5.5 and a viscosity of 200 cps. Dur-O-Set E-646 is indicated to be an ethylene vinyl acetate copolymer with a Tg of -12°C, 52% solids, a pH of 5.5 and a viscosity of 300 cps.

An alternate and useful binding material is the use of a zirconium compound. Zirconyl acetate is preferred zirconium compound used. It is believed that zirconia acts as a high temperature stabilizer, promotes catalytic activity, and improves catalyst adhesion. Upon calcination, zirconium compounds such as zirconyl acetate are converted to ZrO₂ which is believed to be the binding material. Various useful zirconium compounds include acetates, hydroxides, nitrates, etc. for generating ZrO₂ in catalysts. In the case of using zirconyl acetate as a binder for the present catalysts, ZrO₂ will not be formed unless the radiator coating is calcined. Since good adhesion has been attained at a "calcination" temperature of only 120°C, it is believed that the zirconyl acetate has not decomposed to zirconium oxide but instead has formed a cross linked network with the pollutant treating material. Accordingly, the use of any zirconium containing compounds in the present catalysts are not restricted only to zirconia. Additionally, the zirconium compounds can be used with other binders such as the polymeric binder recited above.

The method of the present invention includes forming a mixture comprising the catalytically active manganese component and water. The catalytically active material can be on a suitable support, preferably a refractory oxide support. 'The mixture can be milled, calcined and optionally reduced. The calcining step can be conducted prior to adding the polymeric binder. It is also preferred to reduce the catalytically active material prior to adding the polymeric binder. The slurry comprises a carboxylic acid compound or polymer containing carboxylic acid in an amount to result in a pH of about from 3 to 7, typically 3 to 6, and preferably from 0.5 to 15 weight percent of glacial acetic acid based on the weight of the catalytically active material and acetic acid. The amount of water can be added as suited to attain a slurry of the desired viscosity. The percent solids are typically 20 to 50 and preferably 30 to 40 percent by weight. The preferred vehicle is deionized water (D.I.). The acetic acid can be added upon forming the mixture of the catalytically active material, which may have been calcined, with water. Alternatively, the acetic acid can be added with the polymeric binder. A preferred composition to treat ozone using manganese dioxide as the catalyst can be made using about 1,500 g of manganese dioxide which is mixed with 2,250 g of deionized water and 75 g or acetic acid. The mixture is combined in a 1 gallon ballmill and ballmilled for about 8 hours until approximately 90% of the particles are less than 8 micrometers. The ballmill is drained and 150 g of polymeric binder is added. The mixture is then blended on a rollmill for 30 minutes. The resulting mixture is ready for coating onto a suitable substrate.

The pollutant treating composition can be applied to the atmosphere contacting surface by any suitable means such as spray coating, powder coating, or brushing or dipping the surface into a catalyst slurry.

The atmosphere contacting surface is preferably cleaned to remove surface dirt, particularly oils which could result in poor adhesion of the pollutant treating composition to the surface. Where possible, it is preferred to heat the substrate on which the surface is located to a high enough temperature to volatilize or burn off surface debris and oils.

Where the substrate on which there is an atmosphere contacting surface is made of a material which can withstand elevated temperatures such as an aluminum radiator, the substrate surface can be treated in such a manner as to improve adhesion to the catalyst composition, preferably the ozone carbon monoxide, and/or hydrocarbon catalyst composition. One method is to heat the aluminum substrate such as the radiator to a sufficient temperature in air for a sufficient time to. form a thin layer of aluminum oxide on the surface. This helps clean the surface by removing oils which may be detrimental to adhesion. Additionally, if the surface is aluminum a sufficient layer of oxidized aluminum has been found to be able to be formed by heating the radiator in air for from 0.5 to 24 hours, preferably from 8 to 24 hours and more preferably from 12 to 20 hours at from 350°C to 500°C, preferably from 400 to 500°C and more preferably 425 to 475°C. In some cases, sufficient adhesion without the use of an undercoat layer has been attained where an aluminum radiator has been heated at 450°C for 16 hours in air. This method is particularly useful when applying the coating to new surfaces prior to assembly, either as original equipment or replacement.

Adhesion may improve by applying an **undercoat or precoat** to the substrate. Useful undercoats or precoats include refractory oxide supports of the type discussed above, with alumina preferred. A preferred undercoat to increase adhesion between the atmosphere contacting surface and an overcoat of an ozone catalyst composition is described in commonly assigned U.S. Patent No. 5,422,331. The undercoat layer is disclosed as comprising a mixture of fine particulate refractory metal oxide and a sol selected from silica, alumina, zirconia and titania sols. In accordance with the method of the present invention, surfaces on existing stationary surfaces can be coated in place. The catalyst composition can be applied directly to the surface. Where additional adhesion is desired, an undercoat can be used as recited above.

Where it is practical to separate the radiator from the stationary substrate, a support material such as activated alumina, silica-alumina, bulk titania, titanium sol, silica zirconia, manganese zirconia and others as recited can be formed into a slurry and coated on the substrate preferably with a silica sol to improve adhesion. The precoated substrate can subsequently be coated with manganese nitrate. The coated substrate can then be heated in an oven in air for sufficient time (0.5 to 12 hours at 350° C to 550°C) to calcine the manganese components to form the oxides thereof.

The present invention can additionally comprise **adsorption compositions** supported on the atmosphere contacting surface. The adsorption compositions can be used to adsorb gaseous pollutants such as hydrocarbons and sulfur dioxide as well as particulate matter such as particulate hydrocarbon, soot, pollen, bacteria and germs. Useful supported compositions can include adsorbents such as zeolite to adsorb hydrocarbons. Useful zeolitic compositions are described in Publication No. WO 94/27709 published December 8, 1994 and entitled Nitrous Oxide Decomposition Catalyst. Particularly preferred zeolites are Beta zeolite, and dealuminated Zeolite Y.

Carbon, preferably activated carbon, can be formed into carbon adsorption compositions comprising activated carbon and binders such as polymers as known in the art. The carbon adsorption composition can be applied to the atmosphere contacting surface. Activated carbon can adsorb hydrocarbons, volatile organic components, bacteria, pollen and the like. Yet another adsorption composition can include components which can adsorb SO₃. A particularly useful SO₃ adsorbent is calcium oxide. The calcium oxide is converted to calcium sulfate. The calcium oxide adsorbent compositions can also contain a vanadium or platinum catalyst which can be used to convert sulfur dioxide to sulfur trioxide which

In addition to treatment of atmospheric air containing pollutants at ambient condition or ambient operating conditions, the present invention additionally contemplates additionally to the reduction of the level of ozone the catalytic oxidation and/or reduction of hydrocarbons, nitrogen oxides and residual carbon monoxide using conventional three way catalysts supported on electrically heated catalysts such as are known in the art. The electrically heated catalysts can be located on an electrically heated catalyst monolith. Such electrically heated catalyse substrates are known in the art and are disclosed in references such as U.S. Patent Nos. 5,308,591 and 5,317,869. For the purposes of the present invention, the electrically heated catalyst is a metal honeycomb having a suitable thickness in the flow direction, preferably of from 0.3175 to 30.48 cm (1/8 inch to 12 inches), and more preferably 1.27 to 7.62 cm (0.5 to 3 inches). Preferred supports are monolithic carriers of the type having a plurality of fine, parallel gas flow passages extending therethrough from an inlet face to an outlet face of the carrier so that the passages are open to air flow entering from the front and passing through the monolith in the direction toward the fan. Preferably the passages are essentially straight from their inlet to their outlet and are defined by walls in which the catalytic material is coated as a wash coat so that the gases flowing through the passages contact the catalytic material. The flow passages of the monolithic carrier are thin wall channels which can be of any suitable cross-sectional shape and size such as trapezoidal, rectangular, square, sinusoidal, hexagonal, oval, circular or formed from metallic components which are corrugated and flat as are known in the art. such structures may contain from about 9.3 to 93 or more gas inlet openings ("cells") per square centimeter (60 to 600 or more gas inlet openings ("cells") per square inch) of cross section. The monolith may be made of any suitable material and is preferably capable of being heated upon application of an electric current. A useful catalyst to apply is the three way catalyst (TWC) as recited above which can enhance the oxidation of hydrocarbons and carbon monoxide as well as the reduction of nitrogen oxides. Useful TWC catalysts are recited in U.S. Patent Numbers 4,714,694; 4,738,947; 5,010,051; 5.057,483; and 5,139,992.

### EXAMPLES

The present invention is illustrated further by the following examples which are not intended to limit the scope of this invention.

### Example 1

This is an example of preparing high surface area cryptomelane using MnSO₄.

Molar ratios of KMnO₄ : MnSO₄ : acetic acid were 1:1:43:5.72 Molarities of Mn in solutions prior to mixing were:
0.44 M KMnO₄
0.50 M MnSO₄
FW KMnO₄ = 158.04 g/mol
FW MnSO₄•H₂O = 169.01 g/mol
FW C₂H₄O₂ = 60.0 g/mol

The following steps were conducted:
1. Made a solution of 3.50 moles (553 grams) of KMnO₄ in 8.05 L of D.I. water and heated to 68°C.
2. Made 10.5 L of 2N acetic acid by using 1260 grams of glacial acetic acid and diluting to 10.5 L with D.I. water. Density of this solution is 1.01 g/mL.
3. Weighed out 5.00 moles (846 grams) of manganous sulfate hydrate (MnSO₄•H₂O) and dissolved in 10,115 g of the above 2N acetic acid solution and heated to 40°C.
4. Added the solution from 3. to the solution from 1. over 15 minutes while continuously stirring. After addition was complete, began heating the slurry according to the following heat-up rate:
   1:06 pm 69.4°C
   1:07 pm 71.2°C
   1:11 pm 74.5°C
   1:15 pm 77.3°C
   1:18 pm 80.2°C
   1:23 pm 83.9°C
   1:25 pm 86.7°C
   1:28 pm 88.9°C
5. At 1:28 pm approximately 100 mL of slurry was removed from the vessel and promptly filtered on a Büchner funnel, washed with 2 L of D.I. water, and then dried in an oven at 100°C. The sample was determined to have a BET Multi-Point surface area of 259.5 m²/g and Matrix (T-Plot) surface area of 254.1 m²/g.

### Example 2

This is an example of preparing high surface area cryptomelane using Mn(CH₃COO)_{2.}
Molar ratios of KMnO₄:Mn(CH₃CO₂)₂:acetic acid were 1:1.43:5.72
FW KMnO₄ = 158.04 g/mol Aldrich Lot #08824MG
FW Mn(CH₃CO₂)₂•H₂O = 245.09 g/mol Aldrich Lot #08722HG
FW C₂H₄O₂ = 60.0 g/mol

The following steps were conducted:
1. Made a solution of 2.0 moles (316 grams) of KMnO₄ in 4.6 L of D.I. water and heated to 60°C by heating on hot plates.
2. Made up 6.0 of 2N acetic acid by using 720 grams of glacial acetic acid and diluting to 6.0 L with D.I. water. Density of this solution is 1.01 g/mL.
3. Weighed out 2.86 moles (700 grams) of manganese (II) acetate tetrahydrate [Mn(CH₃CO₂)₂•4H₂O] and dissolved in 5780 g of the above 2N acetic acid solution (in the reactor vessel). Heated to 60°C in the reactor vessel.
4. Added the solution from 1. to the solution from 3. while maintaining the slurry at 62-63°C. After complete addition, gently heated the slurry according to the following:
   82.0°C at 3:58 pm
   86.5°C at 4:02 pm
   87.0°C at 4:06 pm
   87.1°C at 4:08 pm
   shut off heat
   then quenched the slurry by pumping 10 L of D.I. water into the vessel. This cooled the slurry to 58°C at 4:13 pm.
   The slurry was filtered on Büchner funnels. The resulting filter cakes were reslurried in 12 L of D.I. water then stirred overnight in a 5 gallon bucket using a mechanical stirrer. The washed product was refiltered in the morning then dried in an oven at 100°C. The sample was determined to have a BET Multi-Point surface area of 296.4 m²/g and Matrix (T-Plot) surface area of 267.3 m²/g. The resulting cryptomelane is characterized by the XRD pattern of Figure 5. It is expected to have an IR spectrum similar to that shown in Figure 4.

### Example 3

Following is a description of the ozone testing method for determining percent ozone decomposition used in this Example. A test apparatus comprising an ozone generator, gas flow control equipment, water bubbler, chilled mirror dew point hygrometer, and ozone detector was used to measure the percent ozone destroyed by catalyst samples. Ozone was generated in situ utilizing the ozone generator in a flowing gas stream comprised of air and water vapor. The ozone concentration was measured using the ozone detector and the water content was determined utilizing the dew point hygrometer. Samples were tested as 25°C using inlet ozone concentrations of 4.5 to 7 parts per million (ppm) in a gas stream flowing at approximately 1.5 L/minute with a dew point between 15°C and 17°C. Samples were tested as particles sized to -25/+45 mesh held between glass wool plugs in a 0.635 cm (1/4") I.D. Pyrex® glass tube. Tested samples filled a 1 cm portion of the glass tube.

Sample testing generally required between 2 to 16 hours to achieve a steady state of conversion. Samples typically gave close to 100% conversion when testing began and slowly decreased to a "leveled off" conversion that remained steady for extended periods of time (48 hours). After a steady state was obtained, conversions were calculated from the equation: % ozone conversion = [(1-(ozone concentration after passing over catalyst)/(ozone concentration before passing over catalyst)]*100.

Ozone destruction testing on the sample of Example 1 showed 58% conversion.

Ozone destruction testing on the sample of Example 2 showed 85% conversion.

### Example 4

This example is intended to illustrate that the method of Example 2 generated "clean" high surface area cryptomelane for which the ozone destruction performance was not further enhanced by calcination and washing. A 20 gram portion of the sample represented by Example 2 was calcined in air at 200°C for 1 hour, cooled to room temperature, then washed at 100°C in 200 mL of D.I. water by stirring the slurry for 30 minutes. The resulting product was filtered and dried at 100°C in an oven. The sample was determined to have BET Multi-Point surface area of 265 m²/g. Ozone destruction testing on the sample showed 85% conversion. A comparison to the testing of the sample of Example 2 demonstrated that no benefit in ozone conversion was realized from the washing and calcination of the sample of Example 2.

### Example 5

Samples of high surface area cryptomelane were obtained from commercial suppliers and modified by calcination and/or washing. As received and modified powders were tested for ozone decomposition performance according to the method of Example 3 and characterized by powder X-ray diffraction, infrared spectroscopy, and BET surface area measurements by nitrogen adsorption.

### Example 6

A commercially supplied sample of high surface area cryptomelane (Chemetals, Inc., Baltimore, MD) was washed for 30 minutes in D.I. water at 60°C, filtered, rinsed, and oven-dried at 100°C. Ozone conversion of the as received sample was 64% compared to 79% for the washed material. Washing did not change the surface area or crystal structure of this material (223 m²/g cryptomelane) as determined by nitrogen adsorption and powder X-ray diffraction measurements, respectively. However, infrared spectroscopy showed the disappearance of peaks at 1220 and 1320 wavenumbers in the spectrum of the washed sample indicating the removal of sulfate group anions.

### Example 7

Commercially supplied samples of high surface area cryptomelane (Chemetals, Inc., Baltimore, MD) were calcined at 300°C for 4 hours and 400°C for 8 hours. Ozone conversion of the as received material was 44% compared to 71% for the 300°C calcined sample and 75% for the 400°C calcined sample. Calcination did not significantly change the surface area or crystal structure of the 300°C or 400°C samples (334 m²/g cryptomelane). A trace of Mn₂O₃ was detected in the 400°C sample. Calcination causes dehydroxylation of these samples. Infrared spectroscopy show a decrease in the intensity of the band between 2700 and 3700 wavenumbers assigned to surface hydroxyl groups.

## Claims

1. A method for treating the atmosphere to reduce the level of ozone contained therein, the method comprising passing ambient air into operative contact with a pollutant treating surface having a pollutant treating material thereon, wherein the pollutant treating surface is disposed on a stationary substrate, the pollutant treating material comprising a catalytic composition consisting of manganese oxide which is substantially free of anions.

2. The method of claim 1 wherein the step of passing the air in operative contact with the pollutant treating surface comprises actively drawing or forcing ambient air into operative contact with the surface.

3. The method of claim 2 wherein ambient air is actively drawn or forced by means of an air handling system, and the pollutant treating surface is disposed. on an air contacting component of said air handling system.

4. The method of claim 3 wherein the air handling system comprises a fan which has fan blades and the pollutant treating surface is disposed on the fan blades.

5. The method of claim 3 wherein the air handling system comprises one or more air contact surfaces selected from the group consisting of filters, screens and grills, and the pollutant treating surface is disposed on one or more of said air contact surfaces.

6. The method of claim 3 wherein the air handling system comprises one or more removable air contact surfaces, and the pollutant treating surface is disposed on one or more of said removable air contact surfaces.

7. The method of claim 3 wherein the air handling system comprises heat transfer surfaces and the pollutant treating surface is disposed on the heat transfer surfaces or downstream from the heat transfer surfaces.

8. The method of claim 7 wherein the air handling system further comprises one or more removable air contact surfaces located downstream from the heat transfer surfaces, and the pollutant treating surface is disposed on one or more of said removable air contact surfaces.

9. The method of claim 7 wherein said heat transfer surfaces are at a temperature above 25°C during at least a period of normal operation of said air handling system.

10. The method of claim 3 wherein the pollutant treating surface is one which is at a temperature above 25°C during at least a period of normal operation of said air handling system.

11. The method of claim 1 wherein the pollutant creating surface is one which normally attains a temperature above 25°C for at least a measurable period of time.

12. The method of claim 1 wherein the pollutant treating material is contained in paint which has been applied to the pollutant treating surface.

13. The method of claim 1 wherein the air is passed in operative contact with the pollutant treating surface by natural air flow.

14. The method of claim 11 wherein said pollutant treating surface comprises an ambient air contacting surface on the exterior of a structure.

15. The method of claim 1 further comprising increasing the temperature of the ambient air before passing the ambient air over the ambient air contacting surface.

16. The method of claim 1 further comprising increasing the temperature of the air contacting surface before passing the ambient air over the ambient air contacting surface.

17. The method of claim 1 further comprising periodically rejuvenating the pollutant treating surface.

18. The method of claim 17 wherein said rejuvenating comprises cleaning the pollutant treating surface.

19. The method of claim 17 wherein said rejuvenating comprises adding fresh pollutant treating material to the pollutant treating surface.

20. The method of claim 19 further comprising removing at least some of the existing pollutant creating material from the pollutant treating surface prior to adding fresh material.

21. The method of claim 1 in which the ambient air also contains non-gaseous contaminants, the method further comprising filtering the ambient air to remove at least some of the non-gaseous contaminants prior to passing the air into contact with the pollutant treating surface.

22. Apparatus for treating the atmosphere to reduce the level of ozone contained therein, the apparatus comprising:
(a) a stationary substrate having at least one air contacting surface;
(b) a pollutant treating material disposed on said air contacting surface, the pollutant treating material comprising a catalytic composition consisting of manganese oxide which is free of anions ; and
(c) air passing means for passing ambient air into operative contact with the pollutant treating material.

23. The apparatus of claim 22 wherein the air passing means comprises a device for actively drawing or forcing ambient air into operative contact with the pollutant treating material.

24. The apparatus of claim 23 wherein the apparatus comprises an air handling system, and the pollutant creating material is disposed on an air contacting surface of a component of said air handling system.

25. The apparatus of claim 24 wherein the air handling system comprises a fan which has fan blades and the pollutant treating material is disposed on the fan blades.

26. The apparatus of claim 24 wherein the air handling system comprises one or more components selected from the group consisting of filters, screens and grills, and the pollutant treating material is disposed on one or more air contacting surfaces of said components.

27. The apparatus of claim 24 wherein the air handling system comprises one or more removable components which have air contacting surfaces, and the pollutant treating material is disposed on one or more of the air contacting surfaces of said removable components.

28. The apparatus of claim 24 wherein the air handling system comprises a heat exchanger having a heat transfer surface and the pollutant treating material is disposed on the heat transfer surface or on an air contacting surface of a component downstream from the heat transfer surface.

29. The apparatus of claim 28 wherein the air handling system further comprises one or more removable components located downstream from the heat transfer surface, and the pollutant treating material is disposed on one or more air contacting surfaces of said removable components.

30. The apparatus of claim 28 wherein said heat transfer surface is one which is at a temperature above 25°C during at least a period of normal operation of said air handling system.

31. The apparatus of claim 24 wherein the air contacting surface is one which is at a temperature above 25°C during at least a period of normal operation of said air handling system.

32. The apparatus of claim 22 wherein the air contacting surface is one which normally attains a temperature above 25°C for at least a measurable period of time.

33. The apparatus of claim 22 further comprising paint which has been applied to the air contacting surface, and wherein the pollutant treating material is contained in the paint.

34. The apparatus of claim 22 wherein the air passing means is natural air flow.

35. The apparatus of claim 34 comprising a structure with the pollutant treating material disposed on an air contacting exterior surface of the structure.

36. The apparatus of claim 22 further comprising means for increasing the temperature of the ambient air before passing the ambient air into operative contact with the pollutant treating material.

37. The apparatus of claim 22 further comprising means for increasing the temperature of the pollutant treating material before passing the ambient air into operative contact therewith.

38. The apparatus of claim 22 further comprising means for filtering the ambient air to remove at least some non-gaseous contaminants prior to passing the air into contact with the pollutant treating material.

39. A device for treating the atmosphere to reduce the level of at least one gaseous pollutant contained therein, wherein said device is capable of being operatively mounted onto a stationary air handling system which draws or forces a stream of ambient air therethrough, the device comprising:
(a) support means comprising at least one air contacting surface;
(b) a pollutant treating material disposed on said air contacting surface, the pollutant treating material comprising a catalytic composition consisting of manganese oxide which is free of anions; and
(c) mounting means for mounting said device onto said air handling system such that the pollutant treating material is in operative contact with the stream of ambient air.

40. The device of claim 39 wherein the mounting means includes a frame which is affixed to said air handling system and which is capable of holding the support means such that the pollutant treating material is in operative contact with the stream of ambient air.

41. The device of claim 40 wherein the support means is removable from the frame.

## Patentansprüche

1. Verfahren zum Behandeln der Atmosphäre, um die darin enthaltene Konzentration an Ozon zu verringern, wobei das Verfahren das Leiten von Umgebungsluft in funktionellen Kontakt mit einer Schadstoffbehandlungsfläche mit einem Schadbehandlungsmaterial darauf umfasst, wobei die Schadstoffbehandlungsfläche auf einem stationären Träger angeordnet ist und das Schadstoffbehandlungsmaterial eine katalytische Zusammensetzung umfasst, die aus Manganoxid besteht, das im Wesentlichen frei von Anionen ist.

2. Verfahren nach Anspruch 1, wobei der Schritt des Leitens der Luft in funktionellem Kontakt mit der Schadstoffbehandlungsfläche das aktive Saugen bzw. Blasen von Umgebungsluft in funktionellen Kontakt mit der Fläche umfasst.

3. Verfahren nach Anspruch 2, wobei Umgebungsluft mittels eines Klimatisierungssystems aktiv gesaugt oder geblasen wird und sich die Schadstoffbehandlungsfläche an einem Luftkontaktbauteil des Klimatisierungssystems befindet.

4. Verfahren nach Anspruch 3, wobei das Klimatisierungssystem ein Gebläse umfasst, das Gebläseflügel aufweist, und sich die Schadstoffbehandlungsfläche an den Gebläseflügeln befindet.

5. Verfahren nach Anspruch 3, wobei das Klimatisierungssystem eine oder mehrere Luftkontaktflächen umfasst, die aus der Gruppe ausgewählt werden, die aus Filtern, Sieben und Gittern besteht, und sich die Schadstoffbehandlungsfläche an einer oder mehreren der Luftkontaktflächen befindet.

6. Verfahren nach Anspruch 3, wobei das Klimatisierungssystem eine oder mehrere entnehmbare Luftkontaktflächen umfasst und sich die Schadstoffbehandlungsfläche an einer oder mehreren der entnehmbaren Luftkontaktflächen befindet.

7. Verfahren nach Anspruch 3, wobei das Klimatisierungssystem Wärmeübertragungsflächen umfasst und sich die Schadstoffbehandlungsfläche an den Wärmeübertragungsflächen oder stromab von den Wärmeübertragungsflächen befindet.

8. Verfahren nach Anspruch 7, wobei das Luftbehandlungssystem des Weiteren eine oder mehrere entnehmbare Luftkontaktflächen umfasst, die stromab von den Wärmeübertragungsflächen angeordnet sind, und sich die Schadstoffbehandlungsfläche an einer oder mehreren der entnehmbaren Luftkontaktflächen befindet.

9. Verfahren nach Anspruch 7, wobei die Wärmeübertragungsflächen wenigstens während eines Zeitraums normaler Funktion des Klimatisierungssystems eine Temperatur über 25°C haben.

10. Verfahren nach Anspruch 3, wobei die Schadstoffbehandlungsfläche wenigstens während eines Zeitraums normaler Funktion des Klimatisierungssystems eine Temperatur über 25°C hat.

11. Verfahren nach Anspruch 1, wobei die Schadstoffbehandlungsfläche normalerweise wenigstens während eines messbaren Zeitraums eine Temperatur über 25°C erreicht.

12. Verfahren nach Anspruch 1, wobei das Schadstoffbehandlungsmaterial in Farbe enthalten ist, die auf die Schadstoffbehandlungsfläche aufgetragen worden ist.

13. Verfahren nach Anspruch 1, wobei die Luft durch natürlichen Luftstrom in funktionellem Kontakt mit der Schadstoffbehandlungsfläche geleitet wird.

14. Verfahren nach Anspruch 11, wobei die Schadstoffbehandlungsfläche eine Umgebungsluft-Kontaktfläche an der Außenseite einer Struktur umfasst.

15. Verfahren nach Anspruch 1, das des Weiteren das Erhöhen der Temperatur der Umgebungsluft vor dem Leiten der Umgebungsluft über die Umgebungsluft-Kontaktfläche umfasst.

16. Verfahren nach Anspruch 1, das des Weiteren das Erhöhen der Temperatur der Luftkontaktfläche vor dem Leiten der Umgebungsluft über die Umgebungsluft-Kontaktfläche umfasst.

17. Verfahren nach Anspruch1, das des Weiteren das periodische Regenerieren der Schadstoffbehandlungsfläche umfasst.

18. Verfahren nach Anspruch 17, wobei das Regenerieren das Reinigen der Schadstoffbehandlungsfläche umfasst.

19. Verfahren nach Anspruch 17, wobei das Regenerieren das Hinzufügen von frischem Schadstoffbehandlungsmaterial zu der Schadstoffbehandlungsfläche umfasst.

20. Verfahren nach Anspruch 19, das des Weiteren das Entfemen wenigstens eines Teils des vorhandenen Schadstoffbehandlungsmaterials von der Schadstoffbehandlungsfläche vor dem Hinzufügen von frischem Material umfasst.

21. Verfahren nach Anspruch 1, wobei die Umgebungsluft des Weiteren nichtgasförmige Verunreinigungen enthält, und das Verfahren des Weiteren das Filtern der Umgebungsluft zum Entfernen wenigstens einiger der nichtgasförmigen Verunreinigungen vor dem Leiten der Luft in Kontakt mit der Schadstoffbehandlungsfläche umfasst.

22. Vorrichtung zum Behandeln der Atmosphäre, um die darin enthaltene Konzentration an Ozon zu verringern, wobei die Vorrichtung umfasst:
(a) einen stationären Träger mit wenigstens einer Luftkontaktfläche;
(b) ein Schadstoffbehandlungsmaterial, das auf die Luftkontaktfläche aufgetragen ist, wobei das Schadstoffbehandlungsmaterial eine katalytische Zusammensetzung umfasst, die aus Manganoxid besteht, das frei von Anionen ist; und
(c) eine Luftleiteinrichtung, die Umgebungsluft in funktionellen Kontakt mit dem Schadstoffbehandlungsmaterial leitet.

23. Vorrichtung nach Anspruch 22, wobei die Luftleiteinrichtung eine Vorrichtung umfasst, die Umgebungsluft aktiv in funktionellen Kontakt mit dem Schadstoffbehandlungsmaterial saugt oder bläst.

24. Vorrichtung nach Anspruch 23, wobei die Vorrichtung ein Klimatisierungssystem umfasst und sich das Schadstoffbehandlungsmaterial an einer Luftkontaktfläche eines Bauteils des Klimatisierungssystems befindet.

25. Vorrichtung nach Anspruch 24, wobei das Klimatisierungssystem ein Gebläse umfasst, das Gebläseflügel aufweist, und sich das Schadstoffbehandlungsmaterial an den Gebläseflügeln befindet.

26. Vorrichtung nach Anspruch 24, wobei das Klimatisierungssystem eines oder mehrere Bauteile umfasst, die aus der Gruppe ausgewählt werden, die aus Filtern, Sieben und Gittern besteht, und sich das Schadstoffbehandlungsmaterial an einer oder mehreren Luftkontaktflächen der Bauteile befindet.

27. Vorrichtung nach Anspruch 24, wobei das Klimatisierungssystem eines oder mehrere entnehmbare Bauteile umfasst, die Luftkontaktflächen aufweisen, und sich das Schadstoffbehandlungsmaterial an einer oder mehreren der Luftkontaktflächen der entnehmbaren Bauteile befindet.

28. Vorrichtung nach Anspruch 24, wobei das Klimatisierungssystem einen Wärmetauscher mit einer Wärmeübertragungsfläche umfasst und sich das Schadstoffbehandlungsmaterial an der Wärmeübertragungsfläche oder an einer Luftkontaktfläche eines Bauteils stromab von der Wärmeübertragungsfläche befindet.

29. Vorrichtung nach Anspruch 28, wobei das Klimatisierungssystem des Weiteren ein oder mehrere entnehmbare Bauteile umfasst, die stromab von der Wärmeübertragungsfläche angeordnet sind, und sich das Schadstoffbehandlungsmaterial an einer oder mehreren Luftkontaktflächen der entnehmbaren Bauteile befindet.

30. Vorrichtung nach Anspruch 28, wobei die Wärmeübertragungsfläche wenigstens während eines Zeitraums normaler Funktion des Klimatisierungssystems eine Temperatur über 25°C hat.

31. Vorrichtung nach Anspruch 24, wobei die Luftkontaktfläche wenigstens während eines Zeitraums normaler Funktion des Klimatisierungssystems eine Temperatur über 25°C hat.

32. Vorrichtung nach Anspruch 22, wobei die Luftkontaktfläche normalerweise wenigstens während eines messbaren Zeitraums eine Temperatur über 25°C erreicht.

33. Vorrichtung nach Anspruch 22, die des Weiteren Farbe umfasst, die auf die Luftkontaktfläche aufgetragen ist, und wobei das Schadstoffbehandlungsmaterial in der Farbe enthalten ist.

34. Vorrichtung nach Anspruch 22, wobei es sich bei der Luftleiteinrichtung um natürlichen Luftstrom handelt.

35. Vorrichtung nach Anspruch 34, die eine Struktur umfasst, wobei sich das Schadstoffbehandlungsmaterial an einer Luftkontakt-Außenfläche der Struktur befindet.

36. Vorrichtung nach Anspruch 22, die des Weiteren eine Einrichtung umfasst, die die Temperatur der Umgebungsluft erhöht, bevor die Umgebungsluft in funktionellen Kontakt mit dem Schadstoffbehandlungsmaterial geleitet wird.

37. Vorrichtung nach Anspruch 22, die des Weiteren eine Einrichtung umfasst, die die Temperatur des Schadstoffbehandlungsmaterials erhöht, bevor die Umgebungsluft in funktionellen Kontakt damit geleitet wird.

38. Vorrichtung nach Anspruch 22, die des Weiteren eine Einrichtung umfasst, die die Umgebungsluft filtert, um wenigstens einige nichtgasförmige Verunreinigungen zu entfernen, bevor die Luft in Kontakt mit dem Schadstoffbehandlungsmaterial geleitet wird.

39. Gerät zum Behandeln der Atmosphäre, um die darin enthaltene Konzentration wenigstens eines gasförmigen Schadstoffes zu verringern, wobei die Einrichtung funktionell an einem stationären Klimatisierungssystem angebracht werden kann, das einen Strom Luft durch sie hindurch saugt oder bläst, wobei die Einrichtung umfasst:
(a) eine Trageeinrichtung, die wenigstens eine Luftkontaktfläche umfasst;
(b) ein Schadstoffbehandlungsmaterial, das sich an der Luftkontaktfläche befindet, wobei das Schadstoffbehandlungsmaterial eine katalytische Zusammensetzung umfasst, die aus Manganoxid besteht, das frei von Anionen ist; und
(c) eine Anbringungseinrichtung, mit der die Einrichtung so an dem Klimatisierungssystem angebracht wird, dass das Schadstoffbehandlungsmaterial in funktionellem Kontakt mit dem Strom von Umgebungsluft ist.

40. Gerät nach Anspruch 39, wobei die Anbringungseinrichtung einen Rahmen enthält, der an dem Klimatisierungssystem befestigt ist und der die Trageeinrichtung so halten kann, dass das Schadstoffbehandlungsmaterial in funktionellem Kontakt mit dem Strom von Umgebungsluft ist.

41. Gerät nach Anspruch 40, wobei die Trageeinrichtung von dem Rahmen abgenommen werden kann.

## Revendications

1. Procédé de traitement de l'atmosphère pour réduire le niveau d'ozone contenu dans celle-ci, le procédé comprenant le transfert de l'air ambiant par contact opérationnel sur une surface de traitement des émissions polluantes dotée d'un matériau de traitement des émissions polluantes, dans lequel la surface de traitement des émissions polluantes est disposée sur un substrat stationnaire, le matériau de traitement des émissions polluantes comprenant une composition catalytique consistant en oxyde de manganèse sensiblement dépourvu d'anions.

2. Procédé selon la revendication 1 dans lequel l'étape de transfert de l'air par contact opérationnel sur la surface de traitement des émissions polluantes comprend le retrait ou le forçage de façon active par contact opérationnel sur la surface.

3. Procédé selon la revendication 2 dans lequel l'air ambiant est activement retiré ou forcé au moyen d'un système de manutention de l'air, et la surface de traitement des émissions polluantes est disposée sur un composant de contact de l'air dudit système de manutention de l'air.

4. Procédé selon la revendication 3 dans lequel le système de manutention de l'air comprend un ventilateur muni de pâles de ventilateur et la surface de traitement des émissions polluantes est disposée sur les pâles du ventilateur.

5. Procédé selon la revendication 3 dans lequel le système de manutention de l'air comprend une ou plusieurs surfaces de contact de l'air sélectionnées parmi le groupe consistant en des filtres, des écrans et des grilles, et la surface de traitement des émissions polluantes est disposée sur une ou plusieurs desdites surfaces de contact de l'air.

6. Procédé selon la revendication 3 dans lequel le système de manutention de l'air comprend une ou plusieurs surfaces de contact de l'air amovibles, et la surface de traitement des émissions polluantes est disposée sur une ou plusieurs desdites surfaces de contact de l'air amovibles.

7. Procédé selon la revendication 3 dans lequel le système de manutention de l'air comprend des surfaces de transfert de chaleur et la surface de traitement des émissions polluantes est disposée sur les surfaces de transfert de chaleur ou en aval des surfaces de transfert de chaleur.

8. Procédé selon la revendication 7 dans lequel le système de manutention de l'air comprend en outre une ou plusieurs surfaces de contact de l'air amovibles situées en aval des surfaces de transfert de chaleur, et la surface de traitement des émissions polluantes est disposée sur une ou plusieurs desdites surfaces de contact de l'air amovibles.

9. Procédé selon la revendication 7 dans lequel lesdites surfaces de transfert de chaleur se situent à une température supérieure à 25°C pendant au moins une période de fonctionnement normal dudit système de manutention de l'air.

10. Procédé selon la revendication 3 dans lequel la surface de traitement des émissions polluantes est l'une qui se situe à une température supérieure à 25°C pendant au moins une période de fonctionnement normal dudit système de manutention de l'air.

11. Procédé selon la revendication 1 dans lequel la surface de traitement des émissions polluantes est l'une qui atteint normalement une température supérieure à 25°C pendant au moins une période de temps qui peut être mesurée.

12. Procédé selon la revendication 1 dans lequel le matériau de traitement des émissions polluantes est contenu dans la peinture qui est appliquée à la surface de traitement des émissions polluantes.

13. Procédé selon la revendication 1 dans lequel l'air est transféré par contact opérationnel sur la surface de traitement des émissions polluantes par la circulation naturelle de l'air.

14. Procédé selon la revendication 11 dans lequel ladite surface de traitement des émissions polluantes comprend une surface de contact de l'air ambiant sur l'extérieur d'une structure.

15. Procédé selon la revendication 1 comprenant en outre l'augmentation de la température de l'air ambiant avant le transfert de l'air ambiant sur la surface de contact de l'air ambiant.

16. Procédé selon la revendication 1 comprenant en outre l'augmentation de la température de la surface de contact de l'air avant le transfert de l'air ambiant sur la surface de contact de l'air ambiant.

17. Procédé selon la revendication 1 comprenant en outre la rénovation de façon périodique de la surface de traitement des émissions polluantes.

18. Procédé selon la revendication 17 dans lequel ladite rénovation comprend le nettoyage de la surface de traitement des émissions polluantes.

19. Procédé selon la revendication 17 dans lequel ladite rénovation comprend l'ajout de nouveau matériau de traitement des émissions polluantes sur la surface de traitement des émissions polluantes.

20. Procédé selon la revendication 19 comprenant en outre le retrait d'au moins certains des matériaux de traitement des émissions polluantes existants, de la surface de traitement des émissions polluantes avant d'ajouter le nouveau matériau.

21. Procédé selon la revendication 1 dans lequel l'air ambiant contient également des contaminants non gazeux, le procédé comprenant en outre le filtrage de l'air ambiant pour retirer au moins certains des contaminants non gazeux avant de transférer l'air par contact sur la surface de traitement des émissions polluantes.

22. Dispositif pour le traitement de l'atmosphère pour réduire le niveau d'ozone contenu dans celle-ci, le dispositif comprenant :
(a) un substrat stationnaire muni d'au moins une surface de contact de l'air ;
(b) un matériau de traitement des émissions polluantes disposé sur ladite surface de contact de l'air, le matériau de traitement des émissions polluantes comprenant une composition catalytique consistant en oxyde de manganèse dépourvu d'anions ; et
(c) des moyens de transfert de l'air pour le transfert de l'air ambiant par contact opérationnel sur le matériau de traitement des émissions polluantes.

23. Dispositif selon la revendication 22 dans lequel les moyens de transfert de l'air comprennent un dispositif pour retirer ou forcer de manière active l'air ambiant par contact opérationnel sur le matériau de traitement des émissions polluantes.

24. Dispositif selon la revendication 23 dans lequel le dispositif comprend un système de manutention de l'air, et le matériau de traitement des émissions polluantes est disposé sur une surface de contact de l'air d'un composant dudit système de manutention de l'air.

25. Dispositif selon la revendication 24 dans lequel le système de manutention de l'air comprend un ventilateur muni de pâles de ventilateur et le matériau de traitement des émissions polluantes est disposé sur les pâles du ventilateur.

26. Dispositif selon la revendication 24 dans lequel le système de manutention de l'air comprend un ou plusieurs composants sélectionné à partir du groupe consistant en des filtres, des écrans, et des grilles, et le matériau de traitement des émissions polluantes est disposé sur une ou plusieurs surfaces de contact de l'air desdits composants.

27. Dispositif selon la revendication 24 dans lequel le système de manutention de l'air comprend un ou plusieurs composants amovibles muni de surfaces de contact de l'air, et le matériau de traitement des émissions polluantes est disposé sur une ou plusieurs surfaces de contact de l'air desdits composants amovibles.

28. Dispositif selon la revendication 24 dans lequel le système de manutention de l'air comprend un échangeur de chaleur muni d'une surface de transfert de chaleur et le matériau de traitement des émissions polluantes est disposé sur la surface de transfert de chaleur ou sur une surface de contact de l'air d'un composant en aval à partir de la surface de transfert de chaleur.

29. Dispositif selon la revendication 28, dans lequel le système de manutention de l'air comprend en outre un ou plusieurs composants amovibles situés en aval de la surface de transfert de chaleur, et le matériau de traitement des émissions polluantes est disposé sur une ou plusieurs surfaces de contact de l'air desdits composants amovibles.

30. Dispositif selon la revendication 28 dans lequel ladite surface de transfert de chaleur est l'une située à une température supérieure à 25°C pendant au moins une période de fonctionnement normal dudit système de manutention de l'air.

31. Dispositif selon la revendication 24 dans lequel la surface de contact de l'air est l'une située à une température supérieure à 25°C pendant au moins une période de fonctionnement normale dudit système de manutention de l'air.

32. Dispositif selon la revendication 22 dans lequel la surface de contact de l'air est l'une qui atteint normalement une température supérieure à 25°C pendant au moins une période de temps qui peut être mesurée.

33. Dispositif selon la revendication 22 comprenant en outre de la peinture qui est appliquée sur la surface de contact de l'air, et dans lequel le matériau de traitement des émissions polluantes est contenu dans la peinture.

34. Dispositif selon la revendication 22 dans lequel les moyens de transfert de l'air sont la circulation naturelle de l'air.

35. Dispositif selon la revendication 34 comprenant une structure avec le matériau de traitement des émissions polluantes disposée sur une surface extérieure de contact de l'air de la structure.

36. Dispositif selon la revendication 22 comprenant en outre des moyens pour augmenter la température de l'air ambiant avant le transfert de l'air ambiant par contact opérationnel sur le matériau de traitement des émissions polluantes.

37. Dispositif selon la revendication 22 comprenant en outre des moyens pour augmenter la température du matériau de traitement des émissions polluantes avant le transfert de l'air ambiant par contact opérationnel sur celui-ci.

38. Dispositif selon la revendication 22 comprenant en outre des moyens pour filtrer l'air ambiant afin de retirer au moins certains contaminants non gazeux avant le transfert de l'air par contact opérationnel sur le matériau de traitement des émissions polluantes.

39. Dispositif pour le traitement de l'atmosphère pour réduire le niveau d'au moins une émission polluante gazeuse contenue dans celle-ci, dans lequel ledit dispositif peut être monté de façon opérationnelle sur un système de manutention de l'air stationnaire qui retire ou qui force un courant d'air ambiant à travers celui-ci, le dispositif comprenant :
(a) des moyens de support comprenant au moins une surface de contact de l'air ;
(b) un matériau de traitement des émissions polluantes disposé sur ladite surface de contact de l'air, le matériau de traitement des émissions polluantes comprenant une composition catalytique qui consistant en oxyde de manganèse dépourvu d'anions ; et
(c) des moyens de montage pour monter ledit dispositif sur ledit système de manutention de l'air de sorte que le matériau de traitement des émissions polluantes est en contact opérationnel avec le courant d'air ambiant.

40. Dispositif selon la revendication 39 dans lequel les moyens de montage comprennent un châssis qui est fixé audit système de manutention de l'air et qui peut maintenir les moyens de support de sorte que le matériau de traitement des émissions polluantes est en contact opérationnel avec le courant d'air ambiant.

41. Dispositif selon la revendication 40 dans lequel les moyens de support peuvent être retirés du châssis.
